# EUROPEAN PATENT APPLICATION

(11) **EP 4 579 294 A1**
(43) Date of publication of application: **02.07.2025**
(21) Application number: 24209200.5
(22) Date of filing: 28.10.2024
(51) Int. Cl.: G02B 6/12, G02B 6/30, G02B 6/42, H01L 25/16

(54) **MECHANICAL ALIGNMENT FEATURES FOR GLASS WAVEGUIDE TO PHOTONIC INTEGRATED CIRCUIT MATING**

(30) Priority: 29.12.2023 US 202318400983
(71) Applicant: Intel Corporation, Santa Clara, CA 95054 (US)
(72) Inventor: PSAILA, Nicholas D., Lanark ML11 9LA (GB); TADAYON, Pooya, Portland 97225 (US); DIGLIO, Paul J., Gaston, 97119 (US); ZHANG, Zhichao, Chandler 85286 (US)
(74) Representative: Maiwald GmbH

(57) **Abstract**

An apparatus includes an optical interposer including a first surface, a first mating protrusion extending outwardly from the first surface, and two or more alignment protrusions extending outwardly from the first surface. The first mating protrusion is to be partially disposed within a first recess formed in a second surface of a photonic integrated circuit (PIC) die when the first surface of the optical interposer opposes the second surface of the PIC die and respective distal surfaces of the two or more alignment protrusions contact the second surface of the PIC die. A first portion of an outer surface of the first mating protrusion is to contact a first side wall of the first recess and a second portion of the outer surface of the first mating protrusion is to oppose a second side wall of the first recess such that a second space is to be defined therebetween.

## Description

### BACKGROUND

Optical fiber cables (or fiber optic cables) are capable of delivering information via optical signals over great distances at high speeds. For the information carried by optical signals to be processed by electronic integrated circuit components, the information needs to be transferred from the photonic domain to the electrical domain. In some existing approaches, this transfer can include an optical signal passing from an optical fiber in a waveguide of a substrate to a waveguide in a photonic integrated circuit. The optical signal is translated into an electronic signal and passed to a processing unit or other component.

Passive mechanical mating between glass substrates containing optical waveguides and Silicon-based photonic integrated circuits requires tightly toleranced mechanical features to achieve low loss coupling. Typical alignment features on a Silicon photonic integrated circuit may include v-grooves etched in the silicon to allow for mechanical registration with corresponding waveguides in the substrate in both vertical and lateral axes. The alignment features, however, can suffer from dimensional variations, which can result in undesirable levels of coupling loss. Accordingly, alignment improvements are desirable.

### BRIEF DESCRIPTION OF THE DRAWINGS

FIG. 1 is a top perspective view of a system with a photonic integrated circuit (PIC) and an optical interposer with example alignment features.
FIG. 2 is a top perspective view of the system of FIG. 1 without the optical interposer.
FIG. 3 is a bottom perspective view of the optical interposer of FIG. 1.
FIG. 4 is a top plan view of the system of FIG. 1.
FIG. 5 is a top plan view of the system of FIG. 2 without the optical interposer.
FIG. 6 is a front view of the system of FIG. 2.
FIG. 7 is a cross-sectional view of the system of FIG. 5 taken along 7-7.
FIG. 8 is a cross-sectional view of the optical interposer of FIG. 3 taken along 8-8.
FIG. 9 is a cross-sectional view of the system of FIG. 4 taken along 9-9.
FIG. 10 is a simplified flow diagram of an example method for manufacturing a system including a PIC die and an optical interposer with example alignment and mating features.
FIGS. 11A and 11B are cross-sectional views of a portion of the system at different stages of the method of FIG. 10.
FIG. 12A is a first scatter-plot graph of a Montecarlo analysis for mechanical misalignment between an optical interposer and a PIC die using a dual alignment scheme without laterally sliding the optical interposer.
FIG. 12B is a second scatter-plot graph of a Montecarlo analysis for mechanical misalignment between an optical interposer and a PIC die using a dual alignment scheme along with a lateral slide of the optical interposer.
FIG. 13 is a line graph illustrating excess optical coupling loss of waveguide to PIC die coupling for both a single alignment scheme and a dual alignment scheme.
FIG. 14 is a simplified drawing of an example system with multiple PIC dies and an optical interposer with alignment and mating features.
FIG. 15 is a simplified drawing of an example system with a PIC die, an optical interposer with alignment and mating features, and an optical plug.
FIG. 16 is a top view of a wafer and dies that may be included in any of the microelectronic assemblies or integrated circuit components disclosed herein.
FIG. 17 is a cross-sectional of an integrated circuit device that may be included in a microelectronic assembly or integrated circuit component, in accordance with any of the embodiments disclosed herein.
FIG. 18 is a cross-sectional side of an integrated circuit device assembly that may include any of the microelectronic assemblies or integrated circuit components disclosed herein.
FIG. 19 is a block diagram of an example electrical device that may include one or more of the microelectronic assemblies or integrated circuit components disclosed herein.

### DETAILED DESCRIPTION

Disclosed herein are integrated circuit component package technologies that provide mechanical alignment features for waveguide to waveguide registration with vertical axis alignment and horizonal axis alignment. In various examples utilizing the alignment features, an optical interposer is mated with a photonic integrated circuit (PIC) die. One or more waveguides are defined in an optical interposer and one or more waveguides are defined in a PIC die, and the optical interposer and the PIC die are mated such that the waveguides in the optical interposer are aligned with the waveguides in the PIC die, allowing for light to be coupled between the optical interposer and the PIC die.

Typical systems involving components such as silicon-based photonic integrated circuits and glass substrates containing optical waveguides, often use passive mechanical mating features to optically couple the components and to align corresponding waveguides in the components. The passive mating features include anisotropically etched silicon features that are commonly used for mechanical registration between dies, as they typically allow the formation of angled plane structures such as V-grooves or inverted pyramids. The etched structures are typically fabricated using etchants such as potassium hydroxide (KOH) or tetramethylammonium hydroxide (TMAH), which preferentially etch along specific crystal planes, such as the 54.74 degree angled 111 crystal plane in silicon. These structures can provide both lateral and vertical alignment simultaneously; however, are subject to undesirable width variations due to undercut of the masking layer during the wet etch process. Dimensional variations of such features can result in undesirable levels of coupling loss. These dimensional variations typically result in a net vertical misalignment between an optical interposer and a PIC die, which coincides with the axis of greatest sensitivity in optical coupling efficiency due to asymmetry in the mode field of the PIC die spot size converter.

In some examples, glass mating features such as optical fibers or cylindrical protrusions on a glass waveguide interposer, may be arranged such that a longitudinal axis (e.g., cylindrical axis) of the mating feature runs substantially parallel to a surface of the interposer from which the mating feature protrudes. A glass mating feature (e.g., optical fiber or cylindrical protrusion) may be received within a V-groove such that the mating feature abuts both angled sidewalls of the V-groove. The width variations on the PIC V-grooves result in a vertical alignment variation, caused by the intersection of the chord of the cylinder forming the contact points to the V-groove. The chord of the cylinder is defined by the Si crystal plane angle and the radius of curvature of the cylinder.

On the PIC side, the mating structure, such as a silicon nitride (SiN) based taper, typically has an asymmetrical mode field shape, due to fabrication challenges in arbitrarily increasing the thickness of the SiN layer, with typical edge emitting taper structures having a mode field which may have an asymmetry ratio of 1.5: 1 or more. This asymmetrical mode field results in increased sensitivity to Y axis misalignment vs X axis misalignment, with Y being coincidentally the predominant axis of misalignment due to the V-groove width variations.

Integrated circuit component package technologies having mechanical mating and alignment features, as disclosed herein, can resolve many of the aforementioned issues (and more). In one or more examples, separate sets of mechanical alignment features are used to facilitate waveguide to waveguide registration between optical components (e.g., a PIC die and a glass interposer). For lateral (also referred to herein as 'horizontal') alignment, conventional etched features such as V-grooves or inverted pyramids on a PIC die that are sized to receive at least a portion of mating protrusions provided on a lower surface of an optical interposer can be used. For vertical alignment, however, standoff features such as alignment protrusions (also referred to herein as 'bumps') are provided on the lower surface of the optical interposer to contact a top surface of the PIC die. The scheme effectively translates the major axis of misalignment from being vertical into horizontal. This provides a significant optical coupling loss advantage due to a) typical edge couplers being less sensitive to misalignment in the horizontal axis and b) the overall magnitude of the misalignment is reduced.

The example mechanical alignment features can be provided to communicatively couple waveguides between various types of photonic integrated circuit (PIC) components related to computer systems. PIC components that can leverage the mechanical alignment features disclosed herein include, but are not necessarily limited to, photonic integrated circuit (PIC) dies and optical interposers. A PIC die enables optical interconnection of processing units, memory, networking elements, storage elements, and other computer system components that are associated with computer processing functionalities and implemented in one or more integrated circuit dies. An optical interposer may include a solid structure (e.g., glass, ceramic, etc.) with waveguides. For example, an optical interposer includes, but is not necessarily limited to an edge coupler, optical coupler, etc. An optical interposer may be designed to route light between a PIC die and one or more optical plugs, optical fibers, lasers, photodiodes, micro light emitting diodes (microLEDs), other emitters, other receivers, other modulators, other switching elements, and/or other waveguides.

The use of alignment and mating features, as disclosed herein, can provide several advantages. For example, existing manufacturing techniques can be leveraged to achieve higher performance in optical assemblies through lower optical losses. The alignment protrusions can provide substantially better alignment accuracy, due to the tighter manufacturing tolerances typically achieved from the top surface of a PIC die to an optical waveguide. Yields can be improved due to the features allowing greater tolerances for assembly misalignment. Yields can be further improved due to the reduced total die area needed to be defect-free. The reduced contact area between an interposer and an upper surface of a PIC die allows for the reduction of total die area needing to be defect-free. Such a datum feature is likely to reduce the channel-to-channel variation impacts (multiple channel V-groove setups), which can cause global tilts of the optical array since as little as two contact points define the relationship. It should be noted, however, that more than two contact points may be used to define the relationship. The use of the combination of alignment and mating features to provide better alignment accuracy, increased performance, and increased yield, will be further apparent in the description below.

In the following description, specific details are set forth, but embodiments of the technologies described herein may be practiced without these specific details. Well-known circuits, structures, and techniques have not been shown in detail to avoid obscuring an understanding of this description. Phrases such as "an embodiment," "various embodiments," "some embodiments," "at least one embodiment," "one or more embodiments," and the like may include features, structures, or characteristics, but not every embodiment necessarily includes the particular features, structures, or characteristics.

Some embodiments may have some, all, or none of the features described for other embodiments. "First," "second," "third," and the like describe a common object and indicate different instances of like objects being referred to. Unless specifically indicated otherwise, such adjectives do not imply objects so described must be in a given sequence, either temporally or spatially, in ranking, or any other manner. "Connected" may indicate elements are in direct physical or electrical contact with each other and "coupled" may indicate elements co-operate, communicate, or interact with each other, but they may or may not be in direct physical or electrical contact. Furthermore, the terms "comprising," "including," "having," and the like, as used with respect to embodiments of the present disclosure, are synonymous.

As used herein, the phrase "optically coupled" refers to an interconnection of two or more components to facilitate the transfer of a photonic signal (e.g., optical signal) using light waves. For example, a PIC die can be optically coupled to an optical interposer. A PIC die may be further optically coupled to another PIC die, a substrate, or other integrated circuit components in the same or different systems via an optical interposer. A PIC die may also be optically coupled and/or electrically coupled to an integrated circuit die (e.g., processing unit) via an electrical integrated circuit (EIC). As used herein, the phrase "communicatively coupled" refers to an interconnection of two or more components directly or indirectly (e.g., with one or more intervening components, interposers, traces, wires, etc. between the two components) to facilitate the transfer of a photonic signal (e.g., optical signal) using light waves, an electrical signal using analog or digital signals, or any other type of signal that enables information to be communicated from one component to another.

Terms modified by the word "substantially" include arrangements, orientations, spacings, or positions that vary slightly from the meaning of the unmodified term. For example, an edge or surface of a PIC die or optical interposer that is substantially flush or coplanar with another surface or a wall of a substrate or another component includes an edge of a PIC die that is within the placement tolerance of attaching an integrated circuit component to a substrate (e.g., 5-10 microns) or another component. A substantially planar surface can include some surface roughness. A surface or sidewall that is substantially perpendicular to a wafer, a substrate surface, a die surface (e.g., of an IC, PIC, EIC, etc.), or another component surface (e.g., of an optical interposer) includes surfaces or sidewalls that are within 15 degrees of being perpendicular to the wafer, substrate surface, die surface, or other component surface. A surface or sidewall that is substantially parallel to a wafer, a substrate surface, a die surface (e.g., of an IC, PIC, EIC, etc.) or another component surface (e.g., of an optical interposer) includes surfaces or sidewalls that are within +/- 10 degrees of being parallel to the wafer, substrate surface, die surface, or other component surface. Moreover, a stated value for a dimension, feature, or characteristic qualified by the term "about" includes values within +/-10% of the stated value. Similarly, a stated range of values for a dimension, feature, or characteristic includes values within 10% of the listed upper and lower values for the range. Additionally, it will be understood that in the examples shown and described further below, the figures may not be drawn to scale and may not include all possible layers and/or circuit components.

Certain terminology may also be used herein for the purpose of reference only, and thus are not intended to be limiting. For example, terms such as "upper," "lower," "above," "below," "bottom," and "top" refer to directions in the Figures to which reference is made. Terms such as "front," "back," "rear," and "side" describe the orientation and/or location of portions of the integrated circuit component within a consistent but arbitrary frame of reference which is made clear by reference to the text and the associated Figures describing the component under discussion. Such terminology may include the words specifically mentioned above, derivatives thereof, and words of similar import.

As used herein, the term "integrated circuit component" refers to a packaged or unpackaged integrated circuit product that comprises at least one integrated circuit die and is mounted on a component substrate. The packaged integrated circuit component may or may not be encapsulated in a casing material, such as metal, plastic, glass, or ceramic. An integrated circuit component comprising multiple integrated circuit dies can be referred to as a multi-chip package (MCP) or multi-chip module (MCM). In one example, a packaged integrated circuit component contains two or more processor units (XPUs) with corresponding electrical integrated circuits (EICs) and photonic integrated circuits (PICs) arranged in a multi-die layered structure that is mounted on a component substrate, and with an exterior surface of the component substrate comprising a solder ball grid array (BGA) for connecting to a socket. In one example of an unpackaged integrated circuit component, a single monolithic integrated circuit die comprises solder bumps attached to conductive contacts on the die. The solder bumps allow the die to be directly attached to a printed circuit board. An integrated circuit component can comprise one or more of any computing system component described or referenced herein or any other computing system component, such as (but not necessarily limited to) a processor unit (e.g., system-on-a-chip (SoC), processor core, graphics processor unit (GPU), accelerator, chipset processor), I/O controller, memory, memory controller, or network interface controller.

Reference is now made to the drawings, which are not necessarily drawn to scale, wherein similar or same numbers may be used to designate same or similar parts in different figures. The use of similar or same numbers in different figures does not mean all figures including similar or same numbers constitute a single or same embodiment. Like numerals having different letter suffixes may represent different instances of similar components. The drawings illustrate generally, by way of example, but not by way of limitation, various embodiments discussed in the present disclosure.

In the following description, for purposes of explanation, numerous specific details are set forth in order to provide a thorough understanding thereof. It may be evident, however, that the novel embodiments can be practiced without these specific details. In other instances, well known structures and devices are shown in block diagram form in order to facilitate a description thereof. The intention is to cover all modifications, equivalents, and alternatives within the scope of the claims.

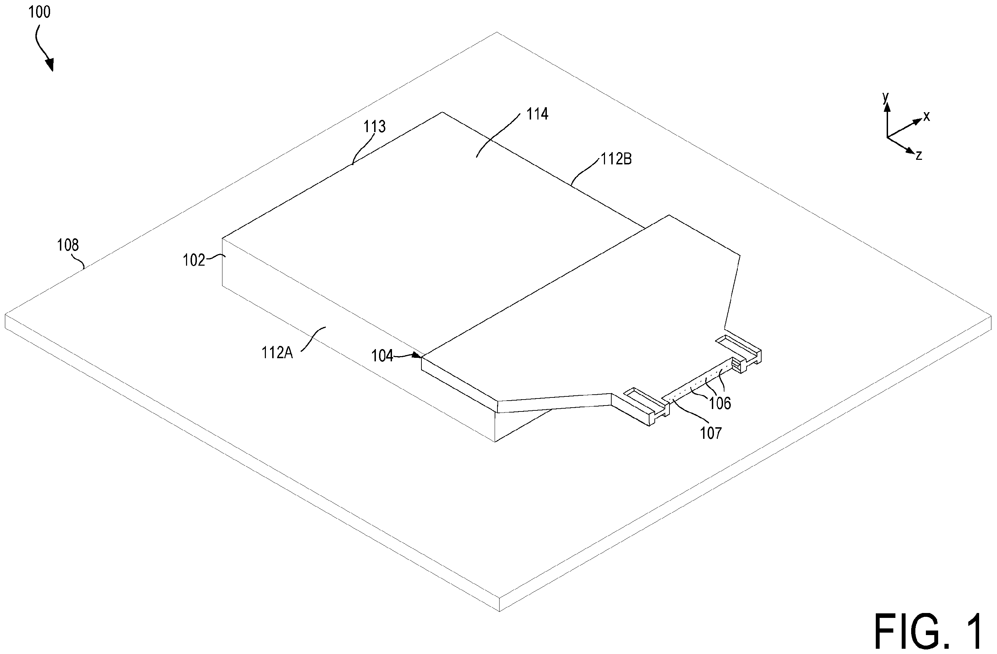

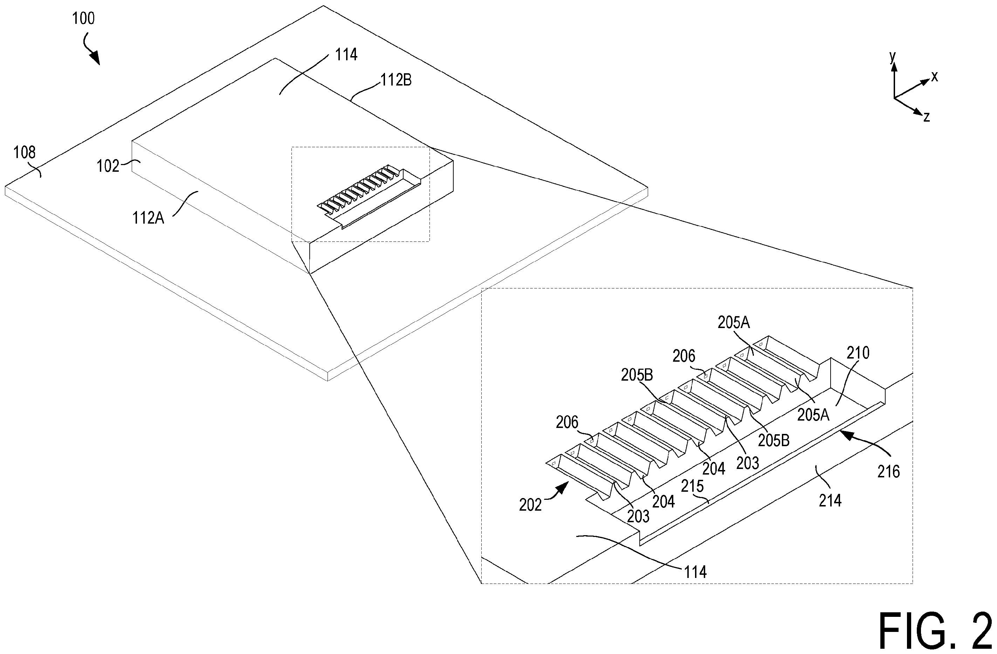

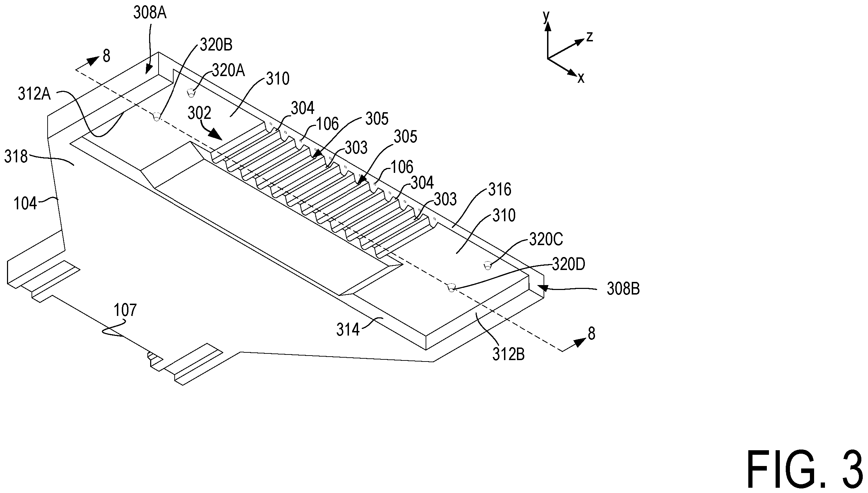

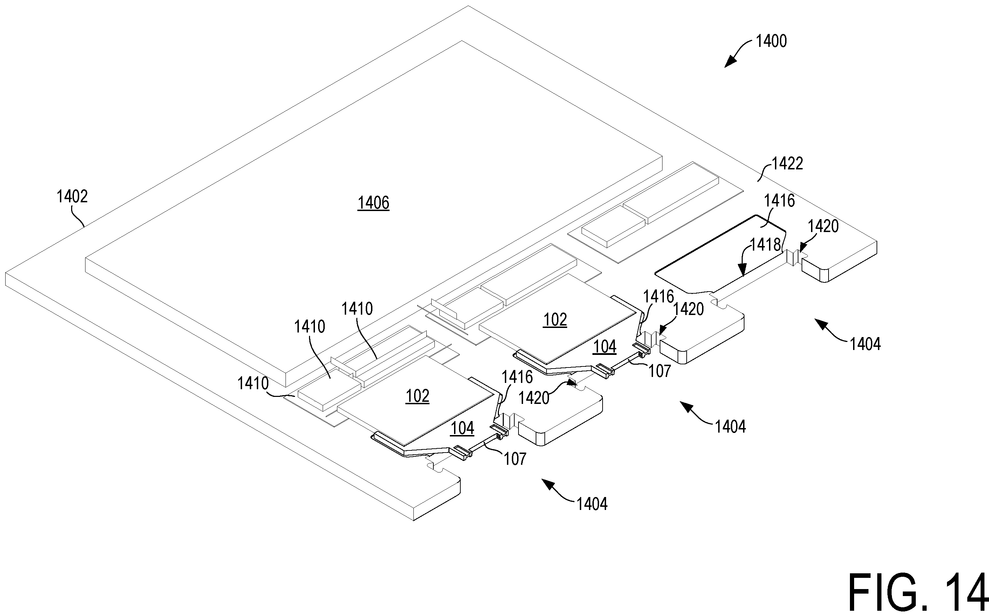

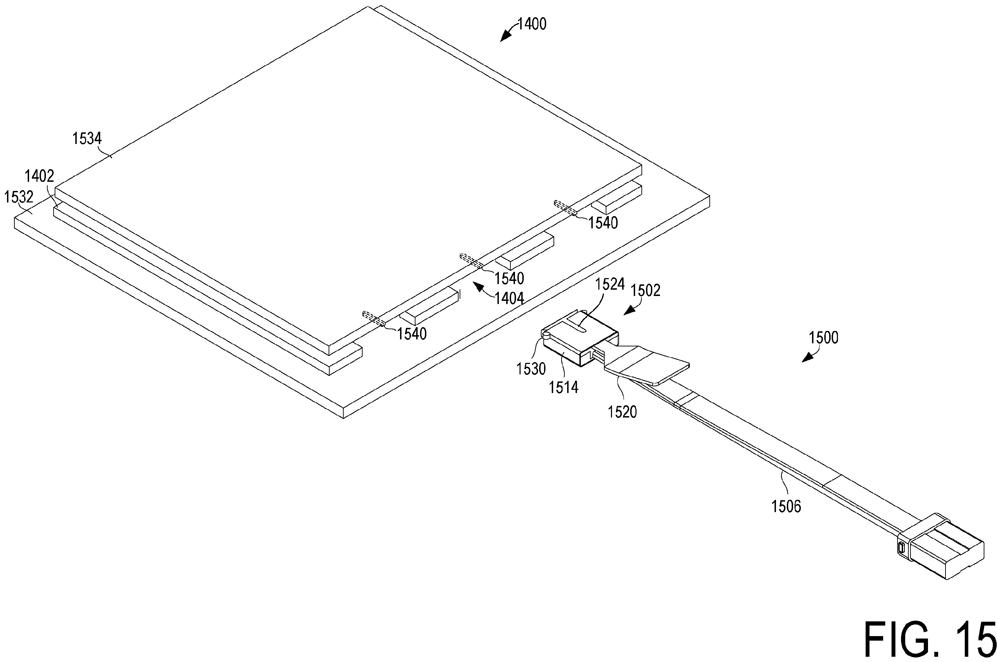

With reference to FIG. 1, in one example, a system 100 includes a substrate 108, a photonic integrated circuit (PIC) die 102 mounted on the substrate 108, and an optical interposer 104 mated with the PIC die 102. The ends of one or more waveguides 106 (e.g., an array of waveguides in this example) are exposed in an outwardly facing surface 107 of one end of the optical interposer 104. The waveguides 106 extend through the body of the optical interposer 104 to the other end of the optical interposer (see FIG. 3). The waveguides 106 are aligned with waveguides defined in an upper surface 114 of the PIC die 102 (see FIG. 2), allowing for light to be coupled between the optical interposer 104 and the PIC die 102. The waveguides 106 in the PIC die 102 may extend from a front portion of the PIC die 102 that is coupled to the optical interposer 104 to a back end 113 of the PIC die 102 and may be disposed between outer side walls 112A and 112B. An optical plug can mate with the optical interposer 104, as described below in more detail with reference to FIGS. 14 and 15.

The illustrative optical interposer 104 can comprise glass, ceramic, or other suitable material. In other embodiments, the optical interposer 104 may be made of any suitable material that may be crystalline, non-crystalline, amorphous, etc., such as fused silicon, borosilicate, sapphire, yttrium aluminum garnet, etc. Non-limiting examples of glass, of which optical interposer 104 may be comprised, include any one or more of aluminosilicate, borosilicate, alumino-borosilicate, silica, and fused silica. Glass used in the optical interposer 104 may include any one or more additives, such as Al2O3, B2O3, MgO, CaO, SrO, BaO, SnO2, Na2O, K2O, SrO, P2O3, ZrO2, Li2O, Ti, and Zn. Glass used in the optical interposer 104 may comprise silicon and oxygen, as well as any one or more of aluminum, boron, magnesium, calcium, barium, tin, sodium, potassium, strontium, phosphorus, zirconium, lithium, titanium, and zinc. The optical interposer 104 may include at least 23 percent silicon by weight and at least 26 percent oxygen by weight. The optical interposer 104 may further comprise at least 5 percent aluminum by weight. The optical interposer 104 may have any suitable length or width, such as 1-500 millimeters. The optical interposer 104 may have any suitable thickness, such as 0.2-5 millimeters. The optical interposer 104 may also be referred to as an optical coupler, a glass interposer, a glass coupler, etc. In at least some examples, the substrate 108 may also comprise glass, ceramic, or other suitable material as described above.

The optical interposer 104 may route light between an optical plug and the PIC die 102 using waveguides 106 defined in the optical interposer 104. The waveguides 106 may be routed in any suitable manner, including in three dimensions, allowing for flexible layouts. The optical interposer 104 may include optical elements such as fan outs, splitters, couplers, combiners, filters, etc.

The PIC die 102 may be made of any suitable material, such as silicon. In the illustrative embodiment, waveguides 206 (see FIG. 2) are defined in the PIC die 102 that interface with waveguides 106 defined in the optical interposer 104 to transfer light to or from the PIC die 102. In an illustrative embodiment, waveguides in the PIC die 102 may be silicon waveguides embedded in silicon oxide cladding. The PIC die 102 may include any suitable number of waveguides, including 1, 2, 3... 1024, or more waveguides.

The PIC die 102 is configured to generate, detect, and/or manipulate light. The PIC die 102 may include active or passive optical elements such as splitters, couplers, filters, optical amplifiers, lasers, photodetectors, modulators, etc. The PIC die 102 may have electrical connections to a substrate and/or an electrical integrated circuit (EIC) die, such as for power delivery, sending and receiving data, interconnecting and enabling communication between the PIC die and an integrated circuit (e.g., central processing unit (CPU), graphics processing unit (GPU), etc.), and/or the like.

The illustrative substrate 108 may be any suitable substrate, such as silicon, glass, ceramic, a circuit board, etc. In some embodiments, the substrate 108 is a circuit board made from any suitable material, such as ceramic, glass, and/or organic-based materials with fiberglass and resin, such as FR-4. The substrate 108 may have any suitable length or width, such as 10-500 millimeters. The substrate 108 may have any suitable thickness, such as 0.2-5 millimeters. In some examples, the substrate 108 may be a glass core substrate including a glass core having a thickness in a range of about 50 micrometers (also referred to herein as 'micron' or 'µm') to 1.4 millimeter (also referred to herein as 'mm'). In other examples, substrate 108 may include a multi-layer glass substrate (e.g., coreless substrate) with a glass layer having a thickness in a range of about 25 microns to 50 microns. A glass core, a glass layer, or an overall substrate may have a thickness of about 10 mm on a side to 250 mm on a side (e.g., 10 mm x 10 mm to 250 mm x 250mm). The glass core or glass layer of substrate 108 may comprise a rectangular prism volume with sections (e.g., vias) removed and filled with other material (e.g., metal or wires).

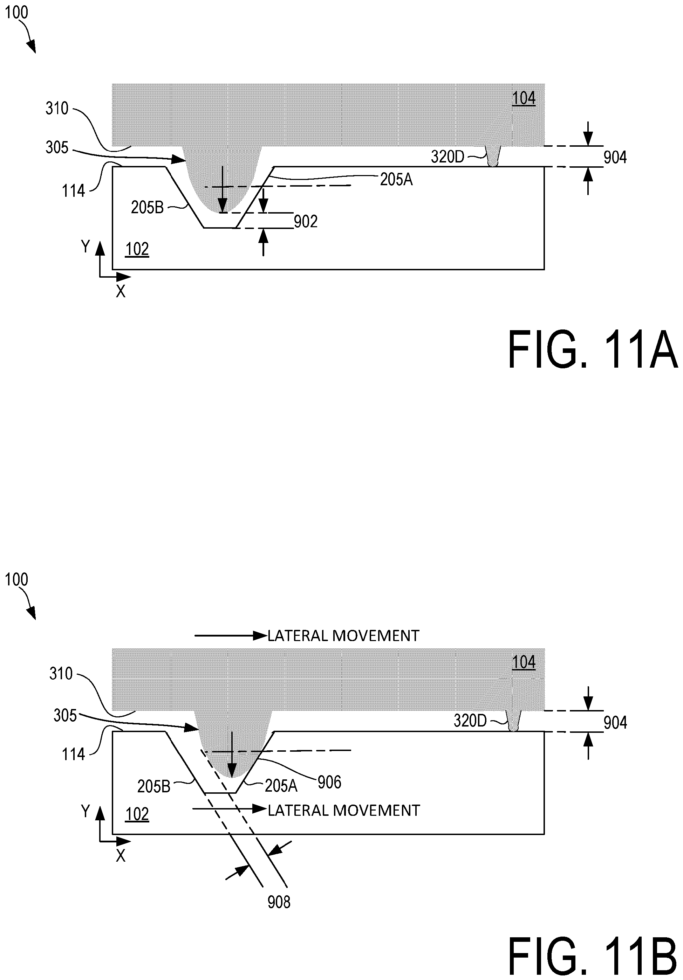

In an illustrative embodiment, the system 100 is at one stage of manufacturing an integrated circuit package that will include the PIC die 102 and the optical interposer 104. The PIC die 102 may be separated from the substrate 108 as part of packaging the integrated circuit package. One embodiment of an integrated circuit package including the PIC die 102 and optical interposer 104 at a different stage of manufacturing is described below with reference to FIGS. 11A and 11B. The system 100 may include additional components not shown in FIG. 1 at any suitable stage of a manufacturing process.

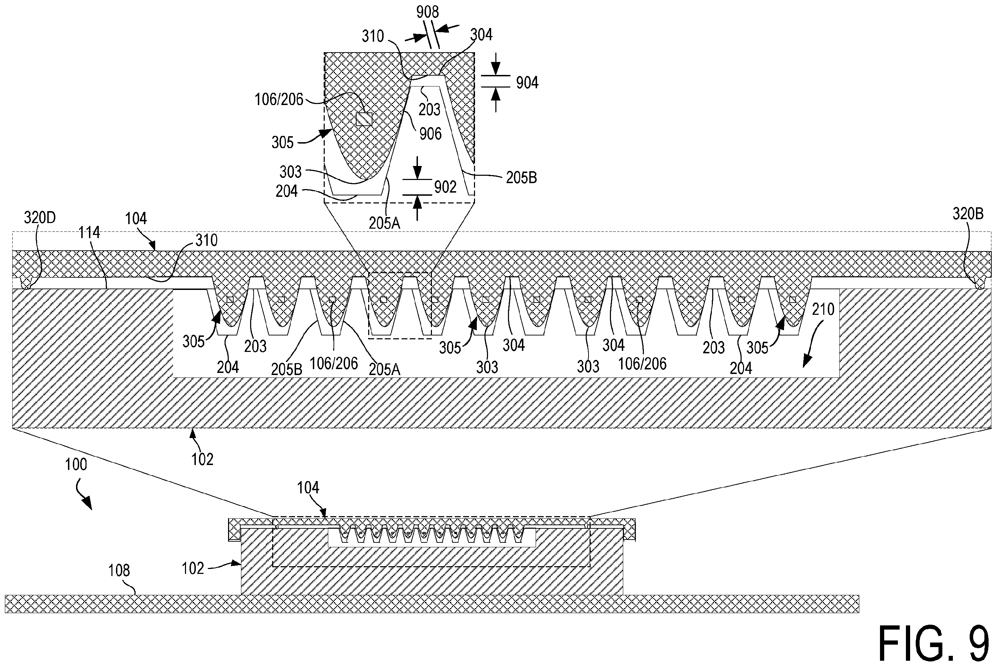

In FIG. 2, the system 100 is illustrated without the optical interposer 104. Some of the structure of the PIC die 102 that facilitates mating the optical interposer 104 with the PIC die 102 is shown in FIG. 2. The PIC die 102 includes one or more recesses in an upper surface 114 surface that mate with structure in the optical interposer. In some examples, a PIC die 102 includes at least two recesses. In the example shown in FIG. 9, the PIC die 102 includes recesses in the form of V-grooves in a V-groove array 202 formed in the upper surface 114. The V-groove array 202 in the PIC die 102 includes a series of alternating peaks 203 and valleys 204 defined by angled side walls 205A and 205B that form the V-grooves.

In other examples, however, the one or more recesses in the PIC die 102 may have any suitable shape including, but not limited to rectangular grooves (e.g., horizontal cuboids) in which the side walls of the groove are substantially perpendicular to the upper surface 114 of the PIC die 102 and the longer edges of the groove are substantially parallel to the upper surface 114 of the PIC die 102. In another example, the one or more recesses in the PIC die 102 may have three-dimensional square shapes (e.g., cubes) or three-dimensional rectangular shapes (e.g., vertical cuboids) with side walls of each being substantially perpendicular to the upper surface 114 of the PIC die 102. For a cuboid recess, the longer edges may be substantially perpendicular to the upper surface 114 of the PIC die 102. If multiple cube or cuboid recesses are used, these recesses may be provided in an array formation (e.g., similar to the side-by-side formation of V-grooves in the V-groove array 202) with some or no spacing therebetween, or may be separately positioned in the upper surface 114 of the PIC die 102, or a suitable combination thereof. First ends of the side walls of a rectangular groove, a vertical cuboid, or a cube are connected to the upper surface 114 and opposite ends of the side walls may be provided with squared or rounded corners and a generally planar surface therebetween. Alternatively, the opposite ends of the side walls may be provided with a hemispherical, semi-conical, semi-cylindrical, or other curved surface therebetween.

In another example, the one or more recesses in the PIC die 102 may be shaped as inverted pyramids. One end of the side walls meet the upper surface 114 and the opposite ends of the side walls (e.g., the apex of the inverted pyramid) may have any suitable shape including, but not necessarily limited to a pointed, curved, or blunted (e.g., planar) shape, and may be provided with angled or rounded corners if the apex is not pointed. The base of the inverted pyramid may have any suitable shape including, but not limited to a square, rectangle, triangle, hexagon, etc. If multiple inverted pyramids are used, the inverted pyramids may be in an array formation (e.g., similar to the side-by-side formation of V-grooves in the V-groove array 202) with some or no spacing therebetween, or may be separately positioned in the upper surface 114 of the PIC die 102. For illustrative purposes, examples are shown and described herein with reference to V-grooves in V-groove arrays. It should be appreciated, however, that any of the V-grooves and V-groove arrays described herein could have an alternative shape (e.g., rectangular groove, vertical cuboid, cylindrical groove, inverted pyramid, cube, etc.).

In the illustrative embodiment, a trench 210 is defined between a proximal end of the V-groove array 202 and a first end wall 216 of the PIC die 102, as shown in FIG. 2. In at least one example, the trench 210 can optionally facilitate placement of a mechanical adhesive and/or an index-matching material. In the illustrative embodiment, the PIC die 102 includes only one trench 210. In other examples, the PIC die 102 may include one or more additional V-groove arrays, each having peaks and valleys aligned with peaks 203 and valleys 204 of the V-groove array 202, and where a trench separates each adjacent pair of V-groove arrays.

In an example, the V-groove array 202 has a pitch of about 160 microns and a depth (i.e., vertical distance between the peaks 203 and the valleys 204) of about 110 microns. In other embodiments, the V-groove array 202 may have any suitable pitch or depth, such as 30 microns to 500 microns, for example.

In an example, the V-groove array 202, the trench 210, the first end wall 216, etc., are etched from the substrate of the PIC die 102, such as by using 2D and 3D lithography. In other embodiments, some or all of the V-groove array 202, the trench 210, the first end wall 216, etc., may be formed from another material, such as a material grown on or adhered to the PIC die 102.

Referring now to FIG. 3, the optical interposer 104 includes a combination of registration features that minimize misalignment with respect to a Y-axis and an X-axis. A first registration feature includes a V-groove array 302 provided on a substantially planar recessed surface 310 of the optical interposer 104, which is recessed from a bottom surface 318 of the optical interposer 104. The V-groove array 302 includes alternating peaks 303 and valleys 304. The peaks 303 and valleys 304 define mating protrusions 305 that extend outwardly from recessed surface 310 and enable the optical interposer 104 to be mated with the PIC die 102 by each of the mating protrusions 305 being at least partially received within a corresponding groove of the V-groove array 202 of the PIC die 102.

In this example, waveguides 106 exposed at an end wall 316 of the optical interposer 104 extend through the optical interposer 104 to the outwardly facing surface 107 of the optical interposer 104. When the optical interposer 104 is mated with the PIC die 102, the waveguides 106 exposed at the end wall 316 of the optical interposer 104 are aligned with and engage the waveguides 206 exposed at the end of the V-groove array 202 in the PIC die 102.

In an example, the distal ends of the mating protrusions 305 are generally cylindrical and each has a longitudinal axis that is substantially parallel to the recessed surface 310 of the optical interposer 104. Angled sides extend from opposite sides of the distal ends to the recessed surface 310. In an example, the V-groove array 302 has a pitch of about 127 microns, 160 microns, or 250 microns. A depth of the V-groove array (i.e., vertical distance between the peaks 303 and the valleys 304) may be about 90 microns. In other embodiments, the V-groove array 302 may have any suitable pitch or depth, such as 30-500 microns. The vertical dimension (or height) of the mating protrusions 305 corresponds to the depth of the V-groove array 302.

It should be appreciated that numerous other shapes and various dimensions could be utilized to form the mating protrusions 305. In one example, the distal ends of the mating protrusions 305 could be generally trapezoidal in shape. In another example, the shape of the mating protrusions may be modified to interface with the particular shape of the recesses (e.g., rectangular grooves, vertical cuboid, cube, inverted pyramids, semi-cylindrical groove, etc.) in the PIC die 102 that receive the mating protrusions. The mating protrusions 305 can be sized, however, to allow insertion into the recesses, respectively, without contacting the side walls of the recesses. After insertion, the mating protrusions 305 can be moved laterally until at least one mating protrusion 305 contacts one side wall of the recess in which that mating protrusion is disposed. In some examples, lateral movement causes some or all mating protrusions to each contact a side wall of the respective recess in which that mating protrusion is disposed.

In an example, the optical interposer 104 includes inner side walls 312A and 312B of wings 308A and 308B, respectively. At least a portion of the inner side walls 312A and 312B engage an upper portion of the outer side walls 112A and 112B, respectively, of the PIC die 102 when the optical interposer 104 is mated with the PIC die 102. The inner side walls 112A and 112B may be bonded to the PIC die 102 using a mechanical adhesive, for example. The optical interposer 104 also includes another inner wall 314 that is configured to engage an outer surface 214 of the first end wall 216 of the PIC die 102 and possibly an upper surface 215 of the first end wall 216. In at least some examples, a mechanical adhesive may be applied to some or all of the interfaces between the various surfaces and walls 312A, 312B, 314, and 316 of the optical interposer 104 and corresponding surfaces and walls of the PIC die 102. The mechanical adhesive may improve mechanical attachment of the optical interposer 104 to the PIC die 102.

As shown in FIG. 3, a second registration feature provided on the optical interposer 104 includes two or more alignment protrusions extending outwardly from the recessed surface 310 of the optical interposer 104. In this example, four alignment protrusions 320A, 320B, 320C, and 320D are provided with a pair of alignment protrusions provided on each side of the V-groove array 302. In this example, the alignment protrusions each include a generally hemispherical distal surface and are arranged on the recessed surface 310 such that, when the optical interposer 104 is mated with the PIC die 102, at least a portion of the distal surfaces of the alignment protrusions contact (e.g., abut, touch, engage, etc.) the upper surface 114 of the PIC die 102. The distal surfaces of the alignment protrusion may, in some cases, have other designs including, but not limited to, a semi-conical shape, any other suitably curved shape, or a planar shape (e.g., round, oval, square, rectangle, trapezoid, etc.).

In an example, the vertical dimension (or height) of an alignment protrusion or a mating protrusion is measured along a line that is substantially perpendicular to the recessed surface 310. The vertical dimension of the alignment protrusions 320A-320D can be measured from the base of the alignment protrusion at the recessed surface 310 to a distal end of the alignment protrusion. The mating protrusion can be measured from the base of the mating protrusion at the recessed surface 310 to a peak of the mating protrusion. The vertical dimension of a mating protrusion in a V-groove array also corresponds to a depth of the V-groove array 302. In an example, the vertical dimension of the alignment protrusions 320A-320D allow for a space to be maintained between the recessed surface 310 of the optical interposer 104 and the upper surface 114 of the PIC die 102 when the distal surfaces (or respective portions thereof) of the alignment protrusions 320A-320D contact the upper surface 114 of the PIC die 102. Further, the vertical dimension of the alignment protrusions 320A-320D is less than the vertical dimension of the mating protrusions 305. Thus, when the distal surfaces (or respective portions thereof) of the alignment protrusions 320A-320D contact the upper surface 114 of the PIC die 102, the mating protrusions 305 are partially received within corresponding grooves in the V-groove array 202 of the PIC die 102.

In other examples, an optical interposer may be provided with a fewer number (e.g., 2 or 3) or a greater number (e.g., 5, 6, or more) of alignment protrusions. In some cases, a single alignment protrusion may be provided on the optical interposer. For example, a single alignment protrusion having more than one point of contact on the distal surface could be used. Examples include a distal surface having a generally flat surface (e.g., square, rectangular, circular, etc.) or arrangement. For example, multiple cylinders with center axes that are substantially parallel to the surface of the optical interposer from which the cylinders protrude could form a triangular, rectangular, or other protrusion.

The alignment protrusions 320A-320D may be any suitable height that is less than the depth of the V-groove array 302 (and therefore less than the height of the mating protrusions 305) and that allows at least a portion of the mating protrusions 305 to be partially received in the corresponding V-grooves of the V-groove array 202 in the PIC die 102. In an example, the alignment protrusions have a height such as 20-100 microns, and a width such as 10-500 microns. In one specific example, the alignment protrusions are approximately 50 microns tall and approximately 50 microns wide.

The upper surface 114 of the PIC die 102 is substantially planar and can provide tight geometrical tolerances with respect to the optical interposer 104. The alignment protrusions 320A-320D are arranged on the optical interposer 104 to contact the upper surface 114 of the PIC die 102 (e.g., via distal surfaces of the alignment protrusions 320A-320D), which constrains the optical interposer 104 relative to the Y-axis. In addition, the mating protrusions 305 are partially received in, and mate with, anisotropically etched features (e.g., grooves such as V-groove array 202, or other recesses or openings) in the upper surface 114 of the PIC die 102, which constrains of the optical interposer 104 relative to the X-axis. The mating of the mating protrusions 305 and the corresponding grooves (or other recesses) formed in the PIC die 102 is further described with reference to FIGS. 9, 11A, and 11B.

The V-groove array 302 provided in the optical interposer 104 offers one possible example of mating protrusions 305 that may be used in conjunction with alignment protrusions, such as alignment protrusions 320A-320D, to enable the optical interposer 104 to be mated with the PIC die 102 and to facilitate alignment of the waveguides 106 of the optical interposer 104 to the waveguides 206 of the PIC die 102. Numerous other possible designs and variations of mating features may be used in accordance with the present disclosure. For example, the mating protrusions may have an alternative arrangement that is not an array. In an example, the mating protrusions may have any suitable shape such as generally vertical cylinders, generally horizontal cylinders, bumps, cuboids, cubes, or any other suitable shape. Additionally, waveguides 106 may not be routed through the mating protrusions 305, but rather, may extend from another surface of the optical interposer 104, and through the optical interposer to another surface of the optical interposer 104 that engages the PIC die 102.

In an illustrative embodiment, structures formed in the optical interposer 104 such as the V-groove array 302, the recessed surface 310, the side walls 312A-312B, the inner wall 314, the alignment protrusions 320A-320D, etc., are etched from the substrate of the optical interposer 104. Any suitable etching process may be used including anisotropic wet etching, dry etching, ion etching, etc. In some processes, one or more suitable chemicals may be used including, but not limited to hydrofluoric acid, nitric acid, sulfuric acid, phosphoric acid, acetic acid, water, or some suitable combination of two or more of the aforementioned. In one example, the structures of the optical interposer 104 may be patterned using ultrashort pulse laser patterning followed by chemical etching, however, other manufacturing techniques could possibly be used such as laser ablation, hot embossing/molding, and/or three-dimensional (3D) printing. In other embodiments, some or all of the V-groove array 302, the recessed surface 310, the side walls 312A-312B, the inner wall 314, the alignment protrusions 320A-320D, etc. may be formed from another material, such as a material grown on or adhered to the optical interposer 104. A core of each waveguide is typically made from a material having a high refractive index, while a cladding that surrounds the core has a low refractive index to confine the light within the waveguide.

In one possible alternative embodiment, the alignment protrusions could be formed on the first surface 114 of the PIC die 102. In this example, the alignment protrusions would extend outwardly from the first surface 114 of the PIC die 102. The alignment protrusions could be configured in the same or similar manner, and could have the same or similar characteristics, as the alignment protrusions 320A-320D provided on the optical interposer 104 and shown and described herein. In this example, distal surfaces (or respective portions thereof) of the alignment protrusions could contact the first surface 310 of the optical interposer 104 when the optical interposer 104 is mounted on the PIC die 102.

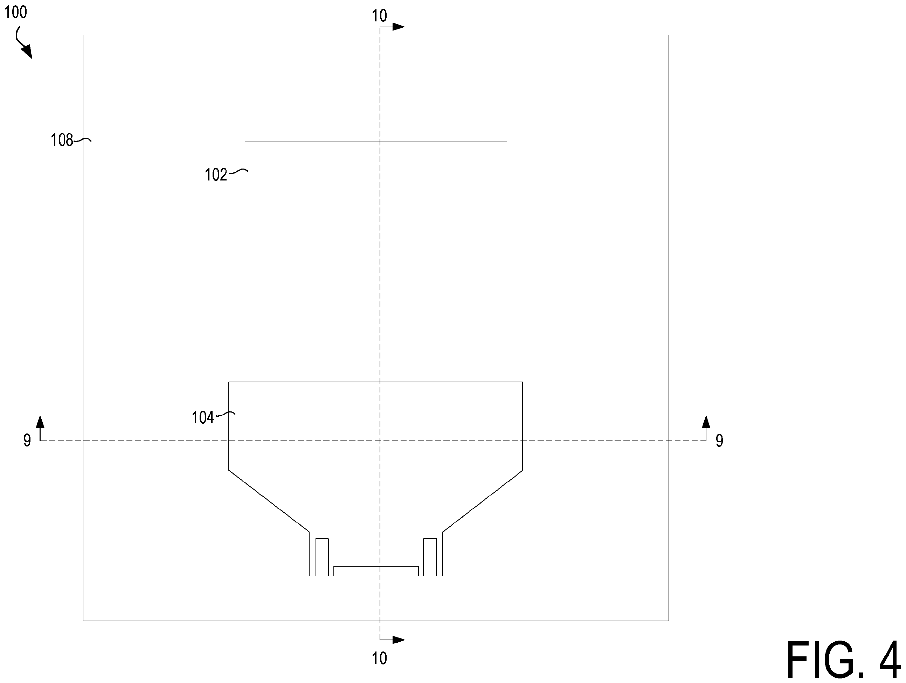

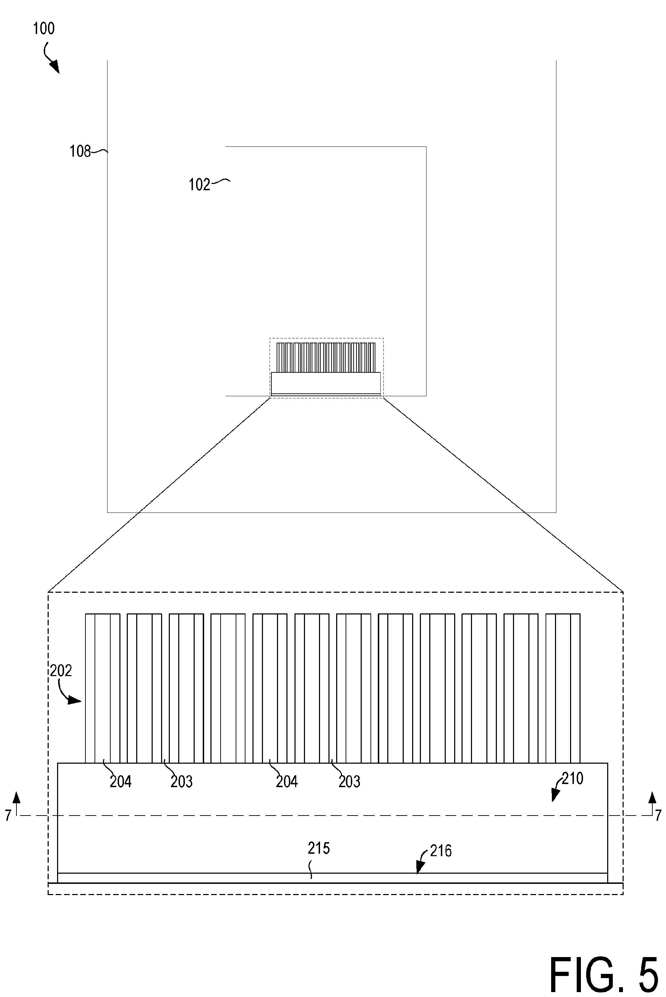

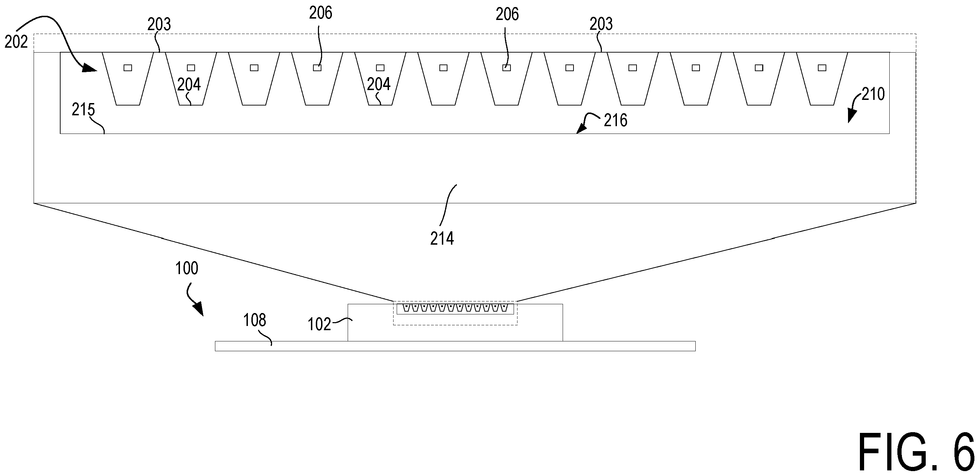

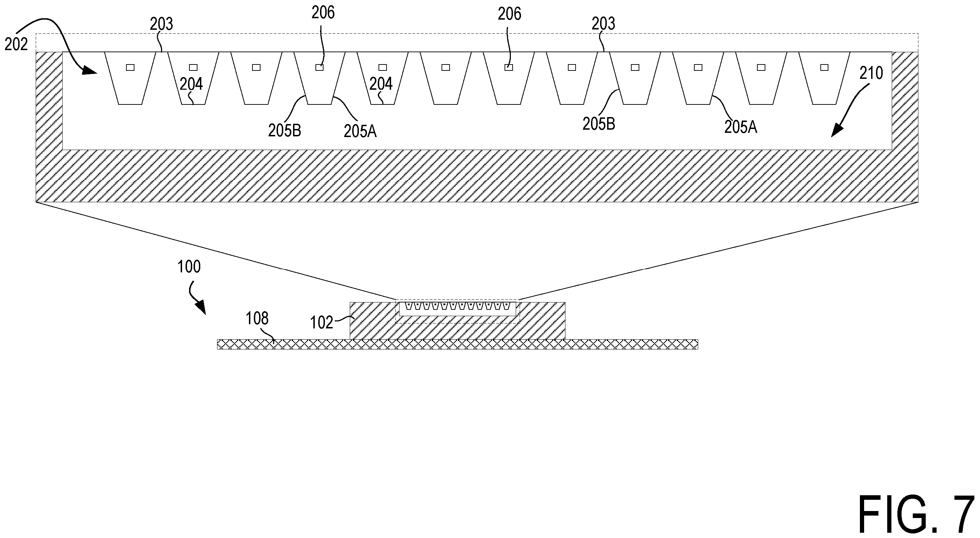

Referring now to FIGS. 4-7, various views of the system 100 are presented. FIG. 4 shows a top plan view of the system 100, including the substrate 108, the PIC die 102 attached to the substrate 108, and the optical interposer 104 attached to the PIC die 102. FIG. 5 shows a top plan view of the system 100 with the PIC die 102 and without the optical interposer 104. FIG. 5 shows the V-groove array 202, the trench 210, and the first end wall 216. FIG. 6 shows a front view of the system 100 with the PIC die 102 and without the optical interposer 104. FIG. 6 shows the V-groove array 202 past the first end wall 216 and the trench 210. FIG. 7 shows a cross-sectional view of the system 100 with the PIC die 102 and without the optical interposer 104 from the same perspective as FIG. 6, taken along line 7-7 shown in FIG. 5 through the trench 210.

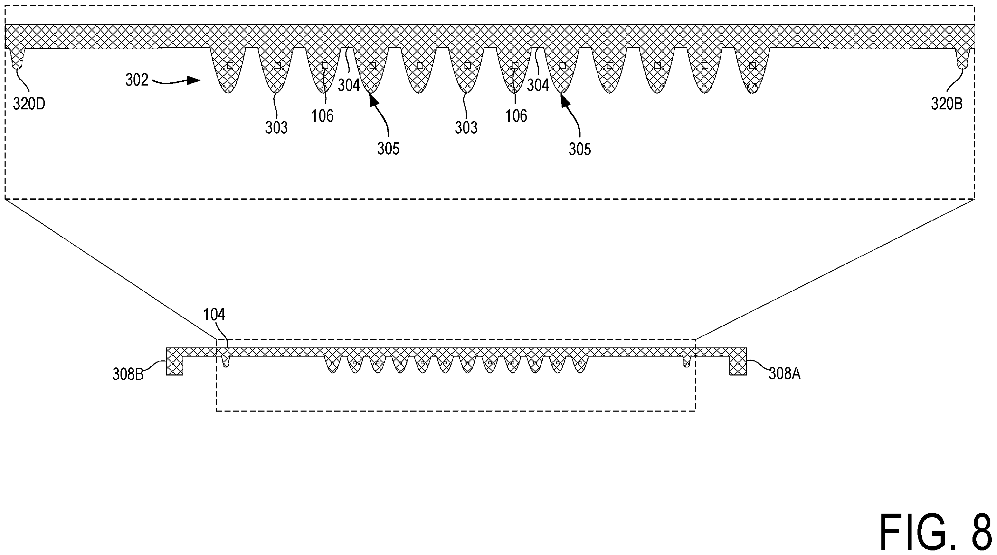

Referring now to one example shown in FIGS. 8 and 9, cross-sectional views of various portions of the system 100 are presented. FIG. 8 shows a cross-sectional view of the V-groove array 302 and two alignment protrusions 320B and 320D of the optical interposer 104 taken along line 8-8 shown in FIG. 3. The other alignment protrusions 320A and 320C are not visible in FIG. 8 due to being located behind alignment protrusions 320C and 320D, respectively, in the view shown in FIG. 8. In an example, the V-grooves of the V-groove array 302 on the optical interposer 104 are more rounded than the V-grooves of the V-groove array 202 of the PIC die 102 shown in FIGS. 6 and 7. FIG. 8 also shows wings 308A and 308B of the optical interposer 104, which may be bonded to the side walls 112A and 112B, respectively, of the PIC die 102 using a mechanical adhesive, for example.

FIG. 9 shows a cross-sectional view of the system 100, including the PIC die 102 and the optical interposer 104. The cross-sectional view of the system 100 in FIG. 9 is taken across the trench 210, perpendicular to the V-grooves of the V-groove array 202 along line 9-9 shown in FIG. 4. The optional mechanical adhesive and index-matching material are omitted from FIG. 9 in the interest of clarity. The waveguides 106 in the optical interposer 104 and the waveguides 206 in the PIC die 102 are aligned and referenced as waveguides 106/206 in FIG. 9.

In the view of the system 100 shown in FIG. 9, the alignment protrusions 320B and 320D are visible, and the other alignment protrusions 320A and 320C are hidden behind the alignment protrusions 320B and 320D, respectively. However, the alignment protrusions could be provided in any number of other arrangements on the optical interposer 104. In an example, at least one alignment protrusion is on one side of the V-groove array 302, and at least one alignment protrusion is on the opposite side of the V-groove array 302. In other examples, the alignment protrusions may be designed to have alignment protrusions only on one side of the V-groove array 302. In yet other examples, the optical interposer 104 may have an alternative design in which the surface from which the alignment protrusions extend opposes other areas of the upper surface of the PIC die 102. The alignment protrusions may be arranged on such an optical interposer at any location(s) spaced from the V-groove array 302 such that the alignment protrusions contact areas of the upper surface 114 of the PIC die 102 that are spaced from the V-groove array 202 in the PIC die 102.

In an example, an optical interposer is configured with a sufficient number of alignment protrusions to create a plane that is substantially parallel to the recessed surface 310 of the optical interposer and enables a small gap 904 (e.g., a space, area, etc.) to be created and maintained when the distal surfaces (or respective portions thereof) of the alignment protrusions are in contact with the upper surface 114 of the PIC die 102. Alignment protrusions may have various designs, and the designs can affect the minimum number of alignment protrusions used on an optical interposer to create the small gap 904. If the alignment protrusions 320A-320D are shaped with distal surfaces that provide a point load (e.g., small surface area) for the optical interposer 104 on the PIC die 102, then three or more alignment protrusions may be provided on the optical interposer 104 to define a plane. If the alignment protrusions are shaped to provide a line load (e.g., a larger surface area), then two or more alignment protrusions may be used. For example, the alignment protrusions (or the distal ends of the alignment protrusions) could be cylindrically shaped having longitudinal axes that are substantially parallel to the upper surface 114. In this scenario, the alignment protrusions provide a line load and thus, two alignment protrusions could be sufficient to create and maintain the gap 904 between the upper surface 114 of the PIC die 102 and the recessed surface 310 of the optical interposer 104. For any number of alignment protrusions, the distal surfaces of the alignment protrusions are in a nonlinear arrangement and define a plane that is substantially parallel to the optical interposer surface from which the alignment protrusions extend. Additionally, for any alignment protrusion design, more than two alignment protrusions (in the case of line loads) or more than three alignment protrusions (in the case of point loads) can be provided.

As illustrated in FIG. 9, at least a portion of the distal surfaces of the alignment protrusions 320A-320D contact the upper surface 114 of the PIC die 102 such that a small gap 904 is maintained between the upper surface 114 of the PIC die 102 and the recessed surface 310 of the optical interposer 104. The height of the alignment protrusions 320A-320D correspond to the size of the gap 904. The alignment protrusions 320A-320D, and therefore the gap 904, may be any suitable size that is less than the depth of the V-groove array 302 (and therefore less than the height of the mating protrusions 305) and that allows at least a portion of the mating protrusions 305 to be partially received in the corresponding V-grooves of the V-groove array 202 in the PIC die 102. The gap 904 (and therefore, the height of each alignment protrusion 320A-320D) may be any suitable amount, such as 2-100 micrometers.

Generally, the mating protrusions 305 of optical interposer 104 are smaller in diameter than the corresponding V-grooves of the V-groove array 202 (e.g., anisotropically etched) on the PIC die 102. This avoids combined X-axis and Y-axis constraint from the mating protrusions 305 alone. As shown in FIG. 9, the width of the valley 304 of each V-groove in the V-groove array 302 of the optical interposer 104 is wider than the peak 203 of the corresponding V-groove in the V-groove array 202 of the PIC die 102, allowing the peak 203 to be received in the corresponding V-groove of the V-groove array 302 of the optical interposer 104. Additionally, the width of the valley 204 of each V-groove in the V-groove array 202 of the PIC die 102 is wider than the peak 303 of the corresponding V-groove in the V-groove array 302 of the optical interposer 104, allowing the peak 303 to be received in the corresponding V-groove of the V-groove array 202 of the PIC die 102.

In an example, the mating protrusions 305 are smaller in diameter than the corresponding V-grooves of the V-groove array 202 to introduce horizontal (or X-axis) alignment of the optical interposer 104 relative to the PIC die 102. Once the alignment protrusions are contacting the upper surface 114 of the PIC die 102, and the mating protrusions 305 are partially received in corresponding V-grooves of the V-groove array 202 of the PIC die 102, the optical interposer 104 is moved, by shifting or sliding for example, laterally to cause the mating protrusions 305 to mate with the anisotropically etched feature, which are V-grooves in this example. This is illustrated at contact point 906 in FIG. 9, where a first portion of an outer surface of the mating protrusion 305 contacts (e.g., engages, abuts, touches, etc.) the angled side wall 205A wall of a V-groove in the V-groove array 202. This results in a gap 908 (e.g., a space, area, etc.) between the other angled wall 205B and a second portion of the outer surface of the mating protrusion 305 that opposes the other angled wall 205B (also depicted in FIGS. 11A-11B). It should be noted that the waveguides 206 of the PIC die 102 are adjusted to accommodate the movement of the optical interposer 104 to the left or right, such that the waveguides 206 align with the waveguides 106 when the optical interposer 104 has been moved and the mating protrusions 305 engage the corresponding V-grooves in the V-groove array 202 of the PIC die 102.

In an example, the height of the alignment protrusions 320A-320D and the height of the mating protrusions 305 are such that another small gap 902 is maintained between the peaks 303 of the mating protrusions 305 and the valleys 204 of the V-grooves in the V-groove array 202 of the PIC die 102. Such a gap 902 can reduce sensitivity to foreign matter, such as dust, that may be trapped between the V-groove array 302 and the V-groove array 202. The gap 902 may be any suitable amount, such as 2-50 micrometers.

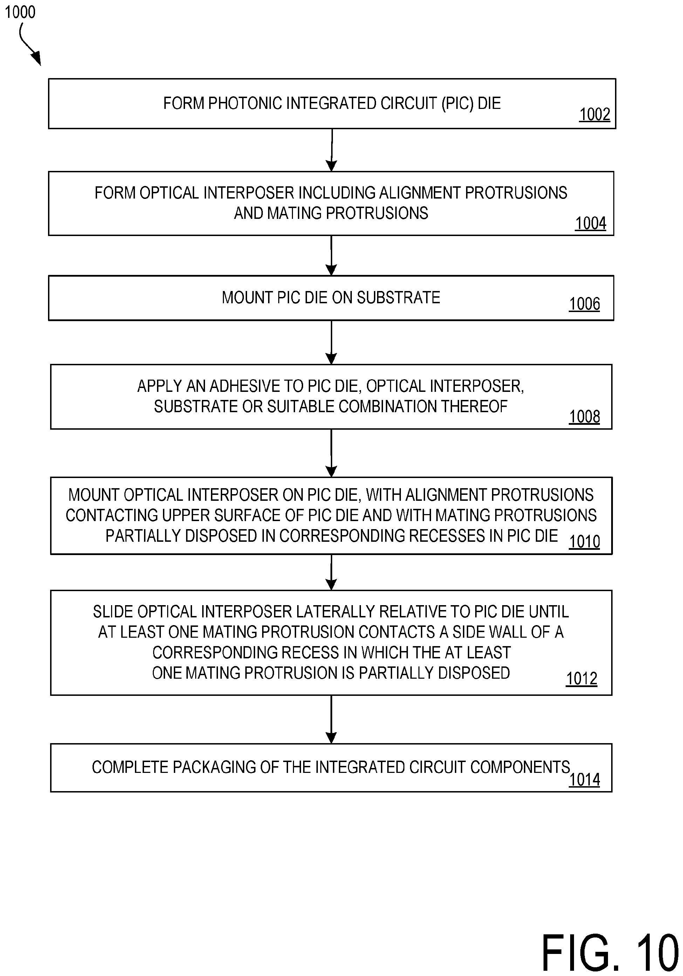

With reference to FIGS. 10 and FIGS. 11A-11B, an example method 1000 of creating an integrated circuit package with an optical socket and with example alignment and mating features as disclosed herein is shown and described. FIG. 10 shows a flowchart for an example method 1000 of creating an integrated circuit package with an optical socket and with example alignment and mating features as disclosed herein. FIGS. 11A-1 1B are cross-sectional views of a portion of system 100 shown in FIG. 9, and illustrating different stages of a manufacturing process.

The method 1000 may be executed by a technician and/or by one or more automated machines. In some embodiments, one or more machines may be programmed to perform some or all of the activities in method 1000. Such a machine may include, e.g., a memory, a processor, data storage, etc. The memory and/or data storage may store instructions that, when executed by the machine, cause the machine to perform some or all of the activities of method 1000. The method 1000 may use any suitable set of techniques that are used in semiconductor processing, such as chemical vapor deposition, atomic layer deposition, physical layer deposition, molecular beam epitaxy, layer transfer, photolithography, ion implantation, dry etching, wet etching, selective laser etching, thermal treatments, flip chip, layer transfer, magnetron sputter deposition, pulsed laser deposition, laser machining, 2D and/or 3D photolithography, etc. It should be appreciated that method 1000 is merely one example of a method to create an embodiment of a system and that other methods may be used to create any suitable embodiment of the system. In some examples, activities of method 1000 may be performed in a different order than that shown in the flowchart, or any one or more of the activities may be omitted or altered in any suitable manner to achieve the intended system. For clarity of the description, method 1000 will be described with reference to system 100, however, numerous alterations and variations of the particular features of system 100 are possible as described herein.

Method 1000 begins at 1002, in which a PIC die 102 is formed. The PIC die 102 may include active or passive optical elements such as splitters, couplers, filters, optical amplifiers, lasers, photodetectors, modulators, etc. The PIC die 102 may include electrical connections for connections to a substrate and/or an EIC die, such as for power delivery, sending and receiving data, etc. In at least some examples, an EIC may be integrated with or communicatively coupled with an integrated circuit to perform data processing functions (e.g., central processing unit (CPU), graphics processing unit (GPU), accelerator processing unit (APU), and any other processing unit (XPU)). The PIC die 102 includes one or more waveguides defined in the PIC die 102. The PIC die 102 also includes one or more V-grooves (e.g., of a V-groove array 202) to facilitate mating of the optical interposer 104 to the PIC die 102.

At 1004, an optical interposer 104 is formed. The optical interposer 104 may include one or more waveguides defined in the optical interposer 104. In the illustrative embodiment, the optical interposer 104 may be embodied as silica. In other embodiments, other glasses or other materials may be used, as described above in more detail. The waveguides 106 defined in the optical interposer 104 may be embodied as direct-write waveguides that are formed by applying a laser to the optical interposer 104 to modify the index of refraction of part of the optical interposer 104. Structures in the optical interposer 104, such as the alignment protrusions 320A-320D and a V-groove array 302 are formed in the optical interposer using any suitable type of etching, laser, and/or photolithography processes. In one nonlimiting example, the optical interposer 104 may be formed using selective laser etching. In another example, the structures of the optical interposer may be patterned using ultrashort pulse laser patterning followed by chemical etching, however, other manufacturing techniques could possibly be used such as laser ablation, hot embossing/molding, and/or 3D printing, such as multiphoton polymerisation-based processes.

At 1006, the PIC die 102 is mounted on a substrate, such as the substrate 108.

At 1008, a suitable adhesive and/or an index matching material is deposited on the PIC die 102, the optical interposer 104, the substrate 108, or some suitable combination thereof.. In one example, a mechanical adhesive may be applied across the V-groove array 302. Additionally or alternatively, a mechanical adhesive may be applied to the side walls 312A-312B of the optical interposer 104.

At 1010, the optical interposer 104 is mounted on the PIC die 102. The optical interposer 104 may be positioned, as shown in FIG. 11A, such that the alignment protrusions 320A-320B are in contact with a first area of the upper surface 114 of the PIC die 102 located on one side of the V-groove array 202, and the alignment protrusions 320C-320D are in contact with a second area of the upper surface 114 of the PIC die 102 located on the opposite side of the V-groove array 202. In addition, the optical interposer 104 may be positioned, as shown in FIG. 11A, such that the mating protrusions 305 are aligned with corresponding recesses in the PIC die 102, such as the V-grooves in V-groove array 202. The positioning of the optical interposer 104 is such that when the alignment protrusions 320A-320D contact the upper surface 114 of the PIC die 102, a gap 904 is created between a recessed surface 310 of the optical interposer 104 and the upper surface 114 of the PIC die 102, and each mating protrusion is partially disposed in a corresponding V-groove of the V-groove array 202 in the PIC die 102.

At 1012, the optical interposer 104 is moved (e.g., slid, shifted, etc.) laterally relative to the upper surface 114 of the PIC die 102 until at least one mating protrusion 305 contacts (e.g., abuts, touches, engages, etc.) a side wall of a corresponding V-groove in the V-groove array 202. This movement or sliding/shifting action is illustrated in FIG. 11B. Such lateral movement effectively mates the optical interposer 104 with the PIC die 102 at contact point 906 based on the contact between a first portion of an outer surface of the mating protrusion 305 and an angled side wall of the V-groove. The lateral movement also aligns the waveguides 106 of the optical interposer 104 with the waveguides 206 of the PIC die 102. Placement of the waveguides in the PIC die 102 may be adjusted to account for the lateral movement of the optical interposer 104 during manufacturing. For example, if the waveguides in the optical interposer 104 are disposed in the mating protrusions 305, then the corresponding waveguides in the PIC die 102 at the end of each V-groove are shifted to the left or right (depending on which direction the optical interposer is moved) during the formation of the PIC die 102. This ensures that the waveguides in the PIC die 102 are aligned with the waveguides in the optical interposer 104 after the lateral movement of the optical interposer 104 In one example, the waveguides 206 and 106 are aligned to within one micrometer or less.

At 1014, the packaging of the integrated circuit components (e.g., PIC die 102, optical interposer 104, EIC die, XPU, etc.) is completed. The mechanical adhesive is cured. For example, the mechanical adhesive may be thermally cured while the optical interposer 104 is held in place relative to the PIC die 102. If present, the index-matching material is also cured. For example, the index-matching material may be cured with ultraviolet light. The PIC die 102 and optical interposer 104 may be detached from the substrate 108 and then integrated with another substrate, with an electronic integrated circuit die (EIC), with an XPU, etc.

By introducing the dual feature alignment scheme as described herein, and particularly with reference to FIGS. 10, 11A, and 11B, the typical dominant Y-axis misalignments are transformed into an X-axis misalignment, controlled by the width variation of the V-grooves in the V-groove array 202 of the PIC die 102. By using the dual alignment scheme together with the lateral slide illustrated in FIGS. 11A-11B during the assembly process, the resulting X-axis misalignment may be reduced by approximately a factor of two, where the mating protrusions make contact on only one side of the V-groove structures.

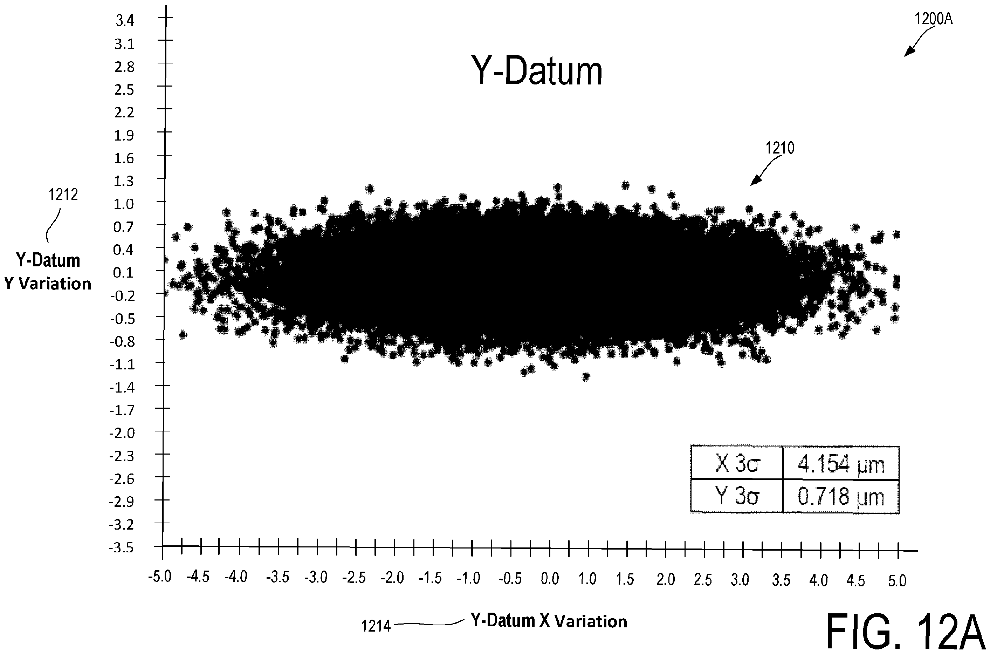

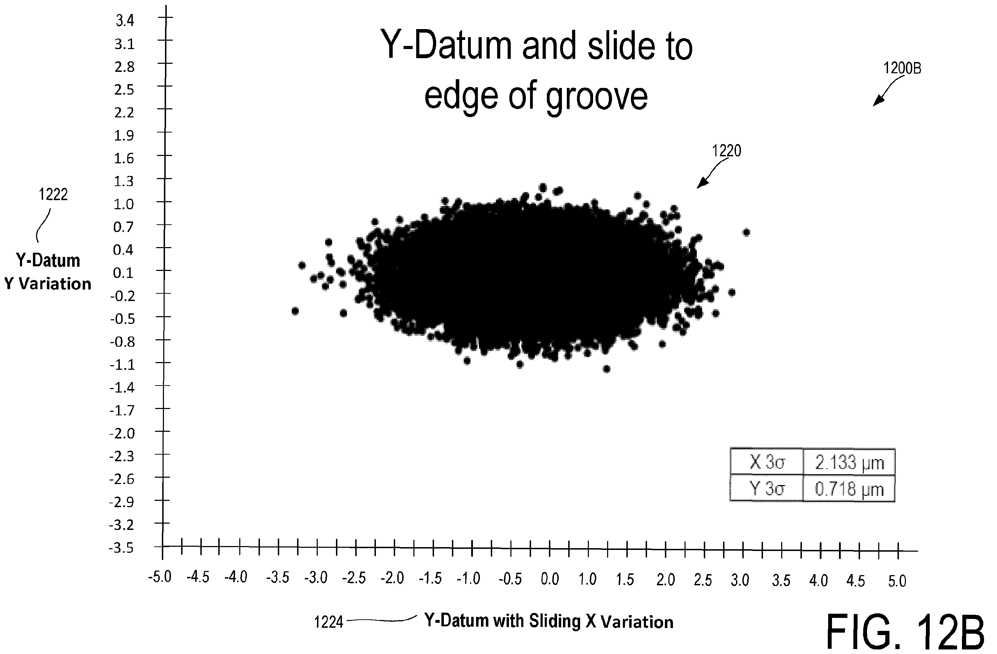

FIGS. 12A and 12B show scatter-plot graphs 1200A and 1200B, respectively, of a Montecarlo analyses for mechanical misalignment between an optical interposer and a PIC die using the dual feature alignment scheme disclosed herein without the lateral slide. In FIG. 12A, a scatter-plot 1210 illustrates an example scenario of misalignment variation in the X-axis and Y-axis when the dual alignment scheme is used. Thus, scatter-plot 1210 illustrates the misalignment of the waveguides when alignment protrusions 320A-320D are used to create a gap 904 between the upper surface 114 of the PIC die 102 and the recessed surface 310 of the optical interposer 104, and the mating protrusions 305 are partially disposed (but not laterally moved) in corresponding V-grooves of the PIC die 102. Values 1212 along the Y-axis represent possible Y-axis misalignment variation (in microns) of the waveguides. Values 1214 along the X-axis represent possible X-axis misalignment variation (in microns) of the waveguides. As shown by the scatter-plot 1210 in the scatter-plot graph 1200A, the misalignment is transferred primarily to the X-axis, whereas typical systems without alignment protrusions have misalignment primarily in the Y-axis.

In FIG. 12B, a scatter-plot 1220 illustrates an example scenario of misalignment variation in the X-axis and Y-axis when the dual alignment scheme is combined with a lateral slide of the optical interposer 104 during the assembly. Thus, scatter-plot 1220 illustrates the misalignment of the waveguides when alignment protrusions 320A-320D are used to create a gap 904 between the upper surface 114 of the PIC die 102 and the recessed surface 310 of the optical interposer 104, and the mating protrusions 305 have been laterally moved to engage a side wall of the corresponding V-grooves of the PIC die 102. Values 1222 along the Y-axis represent possible Y-axis misalignment variation (in microns) of the waveguides. Values 1224 along the X-axis represent possible sliding X-axis misalignment variation (in microns) of the waveguides. As shown by the scatter-plot 1220 in the scatter-plot graph 1200B, the magnitude of misalignment is reduced substantially as the misalignment is primarily translated onto the X-axis, which has a larger optical tolerance. Thus, the overall optical coupling losses between the PIC die 102 and the optical interposer 104 are reduced substantially.

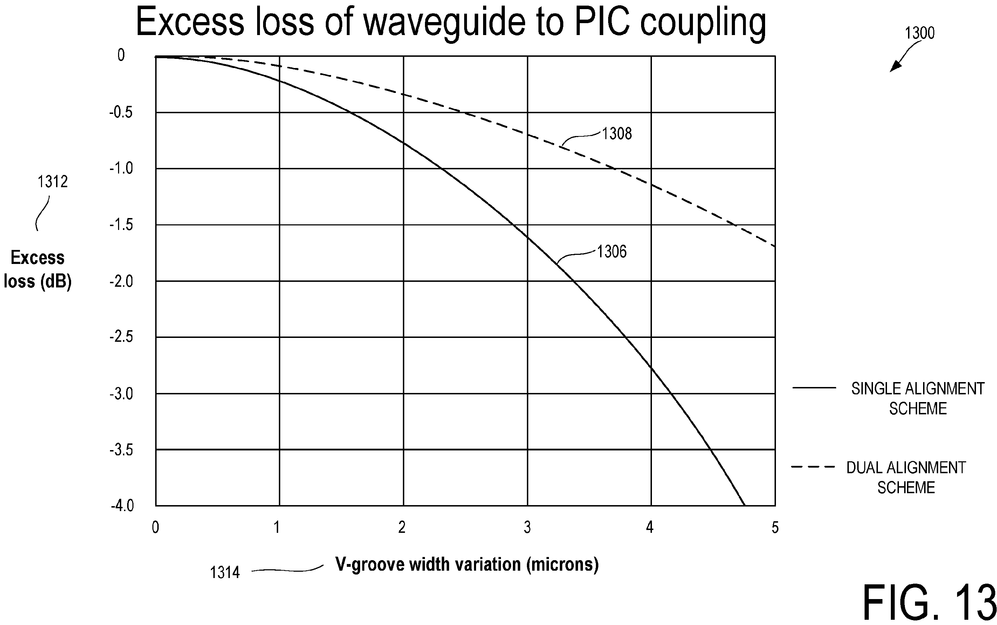

FIG. 13 is a line graph 1300 that shows the excess optical coupling loss due to misalignment as a function of the width variation of the V-groove or other anisotropically etched features on the silicon PIC die. Values 1314 along the X-axis represent possible X-axis V-groove width variations (in microns) of the waveguides, while values 1312 along the Y-axis represent excess optical coupling loss in decibels (dB) of the waveguides. The line graph 1300 shows the optical coupling loss for both a single alignment scheme and a dual alignment scheme. The single alignment scheme includes the use of mating protrusions that are mated with corresponding V-grooves in a PIC die. The single alignment scheme does not include alignment protrusions. As illustrated by line 1306 for a single alignment scheme, the optical coupling loss increases significantly as the V-groove width variation increases when using the single alignment scheme.

The dual alignment scheme uses both mating protrusions (e.g., 305) and alignment protrusions (e.g., 320A-320D) along with a lateral slide during the assembly process. As illustrated by line 1308 for a dual alignment scheme, there is some optical coupling loss as the V-groove width variation increases. However, the loss is less than the loss occurring in a single alignment scheme as shown by line 1306.

An additional benefit of using the dual alignment scheme is that further loss advantages are possible when co-optimization of the mode field diameters of the PIC die and the optical interposer waveguides is performed. This is possible because increasing the mode field diameter of the optical interposer along the X-axis is substantially easier than increasing the mode field diameter along the Y-axis. Furthermore, a wider mode field diameter along the X-axis can achieve substantial improvements in the tolerance to misalignments due to the V-groove width variations.

Referring now to FIG. 14, in one example, an integrated circuit package 1400 includes one or more PIC dies 102, one or more optical interposers 104, a substrate 1402, one or more optical sockets 1404, and an electrical integrated circuit (EIC) die 1406. In the illustrative embodiment, the optical sockets 1404 are formed from the substrate 1402 and an optical interposer 104. The optical interposer 104 has an outwardly facing surface 107 in which the ends of one or more waveguides 106 (shown in FIGS. 1, 3) are positioned. When an optical plug 1500 (see FIG. 15) is mated with the optical socket 1404, the optical fibers of the optical plug 1500 are aligned with the waveguides 106 in the optical interposer 104 to within, e.g., less than one micrometer.

In the illustrative embodiment, the optical socket 1404 is at least partially defined by a cavity 1418 defined in the substrate 1402. The illustrative cavity 1418 is cut all the way through the substrate 1402. The sidewalls of the cavity 1418 define coarse lateral alignment features for the optical plug 1500. The optical plug 1500 can be coarsely aligned vertically by a lid 1534 and another substrate 1532, as described below in more detail with reference to FIG. 15.

The cavity 1418 may include indents 1420 that act as latching features. The indents 1420 extend from the sidewalls of the cavity 1418 further inward into the substrate 1402. Protrusions 1530 of the optical plug 1500 can lock into position in the indents 1420, preventing the optical plug 1500 from being removed.

In the illustrative embodiments, the optical interposer 104 is positioned on a shelf 1416 that is slightly recessed from a top surface 1422 of the substrate 1402. The shelf 1416 may position the optical interposer 104 at a desired height relative to other components, such as the substrate 1402, the lid 1534, the plug 1500, etc. The shelf 1416 may have any suitable depth, such as 0-250 micrometers.

In the illustrative embodiment, a photonic integrated circuit (PIC) die 102 is mated with the optical interposer 104. In the illustrative embodiment, waveguides 106 in the optical interposer 104 can carry light between the optical fibers of the optical plug 1500 and waveguides 206 (shown in FIG. 2) in the PIC dies 102.

The substrate 1402 may support several additional integrated circuit dies 1410, which may be PIC dies, EIC dies, processing units, or a suitable combination thereof. The additional integrated circuit dies 1410 may facilitate communication, power delivery, and other suitable connections between the PIC dies 102, the EIC die 1406, and processing units (which may be integrated with or separate from the EIC die 1406).

The illustrative substrate 1402 may be any suitable substrate, such as glass, silicon, ceramic, a circuit board, etc. In some embodiments, the substrate 1402 is a circuit board made from any suitable material, such as ceramic, glass, and/or organic-based materials with fiberglass and resin, such as FR-4. In some embodiments, the substrate 1402 is formed from or otherwise includes bismaleimide-triazine (BT) resin. The substrate 1402 may have any suitable length or width, such as 10-500 millimeters. The substrate 1402 may have any suitable thickness, such as 0.2-5 millimeters. The substrate 1402 may support additional components besides those shown in FIG. 1, such as resistors, capacitors, other integrated circuit dies, power electronics, traces, etc.

The EIC die 1406 may include any suitable electronic integrated circuit package, such as resistors, capacitors, inductors, transistors, etc. The EIC die 1406 may include any suitable analog and/or digital circuitry, such as a processor, a memory, an application-specific integrated circuit (ASIC), a field-programmable gate array (FPGA), etc. The EIC 1406 may be embodied as, form part of, be separate from and communicatively coupled to, or include a central processing unit (CPU), a graphics processing unit (GPU), or any other processing unit (XPU). In some embodiments, the integrated circuit package 1400 may be embodied as a router, a switch, a network interface controller, and/or the like. In such embodiments, the EIC die 1406 may include network interface controller circuitry to process, parse, route, etc., network packets sent and received by the integrated circuit package 1400 through the optical plug 1500.

Referring now to FIG. 15, in one embodiment, an optical cable 1500 may be able to connect to the optical socket 1404 of the integrated circuit package 1400. The optical cable 1500 includes one or more optical fibers in a sheath 1506 connected to an optical plug 1502. Housing 1514 holds a ferrule and ferrule holder that mate with the optical interposer 104. As the plug 1502 is plugged into a socket, protrusions 1530 of a spring clip engage the indents 1420 of the socket 1404, securing the optical plug 1502 in place. Pulling on tab 1520 of the retention mechanism will pull the protrusions 1530 of the spring clip inward, freeing the plug 1502 from the socket 1404.

The housing 1514 includes a slot 1524, which can be used to both coarsely align the plug 1502 as well as act as an orientation key, preventing the optical plug 1502 from being inserted upside down. The slot 1524 may interface with the rib 1540 shown in FIG. 15.

The optical cable 1500 may include any suitable number of optical fibers, such as 1-32 fibers. The optical fibers may be arranged at the ferrule in a one- or two-dimensional array. The illustrative optical fibers are made out of glass and can carry light at any suitable wavelength, such as 400-2,000 nanometers. In the illustrative embodiment, the optical fibers may support light in the C-band, O-band, L-band, S-band, etc. In other embodiments, the optical fibers may be made out of a different material.

The optical plug 1502 may have any suitable dimensions. In the illustrative embodiment, the optical plug 1502 has a width of about 5 millimeters and a height of about 1.5 millimeters. In other embodiments, the optical plug 1502 may have a height and/or width of, e.g., 1-10 millimeters. The optical cable 1500 may have an optical plug on the opposite end, which may be similar to, the same as, or different from the optical plug 1502.

In one example, the integrated circuit component 1400 may be mounted on another component, such as a substrate 1532. The substrate 1532 may be, e.g., a motherboard, another circuit board connecting the integrated circuit package 1400 with other components, a housing, etc. The substrate 1532 may be a similar or the same material as the substrate 1402.

As shown in FIG. 15, in use, the integrated circuit package 1400 may include a lid 1534. The lid 1534 may provide coarse alignment for the plug 1502. The lid 1534 may have a rib 1540 that forms part of the socket 1404. The rib 1540 may align with a slot 1524 defined in the optical plug 1502. The rib 1540 and slot 1524 may establish a keying that prevents the optical plug 1502 from being inserted upside down.

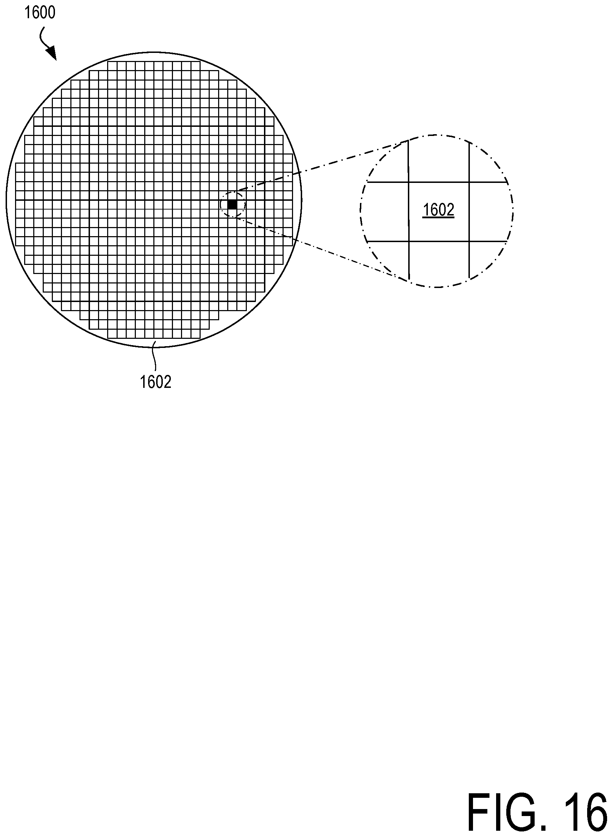

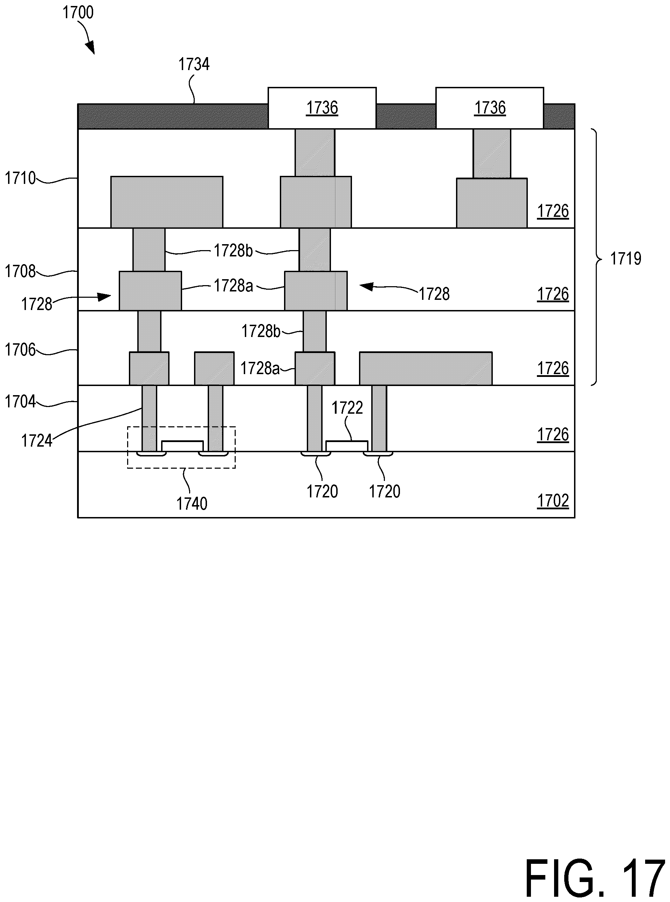

FIG. 16 is a top view of a wafer 1600 and dies 1602 that may be included in any of the microelectronic assemblies or integrated circuit components (e.g., as any suitable ones of the dies 102, 1406) disclosed herein. The wafer 1600 may be composed of semiconductor material and may include one or more dies 1602 having integrated circuit structures formed on a surface of the wafer 1600. The individual dies 1602 may be a repeating unit of an integrated circuit product that includes any suitable integrated circuit. After the fabrication of the semiconductor product is complete, the wafer 1600 may undergo a singulation process in which the dies 1602 are separated from one another to provide discrete "chips" of the integrated circuit product. The die 1602 may be any of the processing units disclosed herein (e.g., 114a-1 14d). The die 1602 may be any one of the dies 102, 1406 disclosed herein. The die 1602 may include one or more transistors (e.g., some of the transistors 1740 of FIG. 17, discussed below), supporting circuitry to route electrical signals to the transistors, passive components (e.g., signal traces, resistors, capacitors, or inductors), and/or any other integrated circuit components. In some examples, the wafer 1600 or the die 1602 may include a memory device (e.g., a random access memory (RAM) device, such as a static RAM (SRAM) device, a magnetic RAM (MRAM) device, a resistive RAM (RRAM) device, a conductive-bridging RAM (CBRAM) device, etc.), a logic device (e.g., an AND, OR, NAND, or NOR gate), or any other suitable circuit element. Multiple ones of these devices may be combined on a single die 1602. For example, a memory array formed by multiple memory devices may be formed on a same die 1602 as a processor unit or other logic that is configured to store information in the memory devices or execute instructions stored in the memory array. Various ones of the microelectronic assemblies disclosed herein may be manufactured using a die-to-wafer assembly technique in which some dies 1602are attached to a wafer 1600 that include others of the dies 1602, and the wafer 1600 is subsequently singulated.

FIG. 17 is a cross-sectional view of an integrated circuit device 1700 that may be included in any of the microelectronic assemblies or integrated circuit packages 1400 disclosed herein (e.g., in any of the dies 102, 1406). One or more of the integrated circuit devices 1700 may be included in one or more dies 1602 (FIG. 16). The integrated circuit device 1700 may be formed on a die substrate 1702 (e.g., the wafer 1600 of FIG. 16) and may be included in a die (e.g., the die 1602 of FIG. 16). The die substrate 1702 may be a semiconductor substrate composed of semiconductor material systems including, for example, n-type or p-type materials systems (or a combination of both). The die substrate 1702 may include, for example, a crystalline substrate formed using a bulk silicon or a silicon-on-insulator (SOI) substructure. In some embodiments, the die substrate 1702 may be formed using alternative materials, which may or may not be combined with silicon, that include, but are not limited to, germanium, indium antimonide, lead telluride, indium arsenide, indium phosphide, gallium arsenide, or gallium antimonide. Further materials classified as group II-VI, III-V, or IV may also be used to form the die substrate 1702. Although a few examples of materials from which the die substrate 1702 may be formed are described here, any material that may serve as a foundation for an integrated circuit device 1700 may be used. The die substrate 1702 may be part of a singulated die (e.g., the dies 1602 of FIG. 16) or a wafer (e.g., the wafer 1600 of FIG. 16).

The integrated circuit device 1700 may include one or more device layers 1704 disposed on the die substrate 1702. The device layer 1704 may include features of one or more transistors 1740 (e.g., metal oxide semiconductor field-effect transistors (MOSFETs)) formed on the die substrate 1702. The transistors 1740 may include, for example, one or more source and/or drain (S/D) regions 1720, a gate 1722 to control current flow between the S/D regions 1720, and one or more S/D contacts 1724 to route electrical signals to/from the S/D regions 1720. The transistors 1740 may include additional features not depicted for the sake of clarity, such as device isolation regions, gate contacts, and the like. The transistors 1740 are not limited to the type and configuration depicted in FIG. 17 and may include a wide variety of other types and configurations such as, for example, planar transistors, non-planar transistors, or a combination of both. Non-planar transistors may include FinFET transistors, such as double-gate transistors or tri-gate transistors, and wrap-around or all-around gate transistors, such as nanoribbon, nanosheet, or nanowire transistors. A transistor 1740 may include a gate 1722 formed of at least two layers, a gate dielectric, and a gate electrode. The gate dielectric may include one layer or a stack of layers. The one or more layers may include silicon oxide, silicon dioxide, silicon carbide, and/or a high-k dielectric material.

The high-k dielectric material may include elements such as hafnium, silicon, oxygen, titanium, tantalum, lanthanum, aluminum, zirconium, barium, strontium, yttrium, lead, scandium, niobium, and zinc. Examples of high-k materials that may be used in the gate dielectric include, but are not limited to, hafnium oxide, hafnium silicon oxide, lanthanum oxide, lanthanum aluminum oxide, zirconium oxide, zirconium silicon oxide, tantalum oxide, titanium oxide, barium strontium titanium oxide, barium titanium oxide, strontium titanium oxide, yttrium oxide, aluminum oxide, lead scandium tantalum oxide, and lead zinc niobate. In some embodiments, an annealing process may be carried out on the gate dielectric to improve its quality when a high-k material is used.

The gate electrode may be formed on the gate dielectric and may include at least one p-type work function metal or n-type work function metal, depending on whether the transistor 1740 is to be a p-type metal oxide semiconductor (PMOS) or an n-type metal oxide semiconductor (NMOS) transistor. In some implementations, the gate electrode may consist of a stack of two or more metal layers, where one or more metal layers are work function metal layers and at least one metal layer is a fill metal layer. Further metal layers may be included for other purposes, such as a barrier layer.

For a PMOS transistor, metals that may be used for the gate electrode include, but are not limited to, ruthenium, palladium, platinum, cobalt, nickel, conductive metal oxides (e.g., ruthenium oxide), and any of the metals discussed below with reference to an NMOS transistor (e.g., for work function tuning). For an NMOS transistor, metals that may be used for the gate electrode include, but are not limited to, hafnium, zirconium, titanium, tantalum, aluminum, alloys of these metals, carbides of these metals (e.g., hafnium carbide, zirconium carbide, titanium carbide, tantalum carbide, and aluminum carbide), and any of the metals discussed above with reference to a PMOS transistor (e.g., for work function tuning).

In some embodiments, when viewed as a cross-section of the transistor 1740 along the source-channel-drain direction, the gate electrode may consist of a U-shaped structure that includes a bottom portion substantially parallel to the surface of the die substrate 1702 and two sidewall portions that are substantially perpendicular to the upper surface of the die substrate 1702. In other embodiments, at least one of the metal layers that form the gate electrode may simply be a planar layer that is substantially parallel to the upper surface of the die substrate 1702 and does not include sidewall portions substantially perpendicular to the upper surface of the die substrate 1702. In other embodiments, the gate electrode may consist of a combination of U-shaped structures and planar, non-U-shaped structures. For example, the gate electrode may consist of one or more U-shaped metal layers formed atop one or more planar, non-U-shaped layers.

In some embodiments, a pair of sidewall spacers may be formed on opposing sides of the gate stack to bracket the gate stack. The sidewall spacers may be formed from materials such as silicon nitride, silicon oxide, silicon carbide, silicon nitride doped with carbon, and silicon oxynitride. Processes for forming sidewall spacers are well known in the art and generally include deposition and etching process steps. In some embodiments, a plurality of spacer pairs may be used; for instance, two pairs, three pairs, or four pairs of sidewall spacers may be formed on opposing sides of the gate stack.

The S/D regions 1720 may be formed within the die substrate 1702 adjacent to the gate 1722 of individual transistors 1740. The S/D regions 1720 may be formed using an implantation/diffusion process or an etching/deposition process, for example. In the former process, dopants such as boron, aluminum, antimony, phosphorous, or arsenic may be ion-implanted into the die substrate 1702 to form the S/D regions 1720. An annealing process that activates the dopants and causes them to diffuse farther into the die substrate 1702 may follow the ion-implantation process. In the latter process, the die substrate 1702 may first be etched to form recesses at the locations of the S/D regions 1720. An epitaxial deposition process may then be carried out to fill the recesses with material that is used to fabricate the S/D regions 1720. In some implementations, the S/D regions 1720 may be fabricated using a silicon alloy such as silicon germanium or silicon carbide. In some embodiments, the epitaxially deposited silicon alloy may be doped in situ with dopants such as boron, arsenic, or phosphorous. In some embodiments, the S/D regions 1720 may be formed using one or more alternate semiconductor materials such as germanium or a group III-V material or alloy. In further embodiments, one or more layers of metal and/or metal alloys may be used to form the S/D regions 1720.

Electrical signals, such as power and/or input/output (I/O) signals, may be routed to and/or from the devices (e.g., transistors 1740) of the device layer 1704 through one or more interconnect layers disposed on the device layer 1704 (illustrated in FIG. 17 as interconnect layers 1706-1710). For example, electrically conductive features of the device layer 1704 (e.g., the gate 1722 and the S/D contacts 1724) may be electrically coupled with the interconnect structures 1728 of the interconnect layers 1706-1710. The one or more interconnect layers 1706-1710 may form a metallization stack (also referred to as an "ILD stack") 1719 of the integrated circuit device 1700.

The interconnect structures 1728 may be arranged within the interconnect layers 1706-1710 to route electrical signals according to a wide variety of designs; in particular, the arrangement is not limited to the particular configuration of interconnect structures 1728 depicted in FIG. 17. Although a particular number of interconnect layers 1706-1710 is depicted in FIG. 17, embodiments of the present disclosure include integrated circuit devices having more or fewer interconnect layers than depicted.

In some embodiments, the interconnect structures 1728 may include lines 1728a and/or vias 1728b filled with an electrically conductive material such as a metal. The lines 1728a may be arranged to route electrical signals in a direction of a plane that is substantially parallel with a surface of the die substrate 1702 upon which the device layer 1704 is formed. For example, the lines 1728a may route electrical signals in a direction in and out of the page and/or in a direction across the page from the perspective of FIG. 17. The vias 1728b may be arranged to route electrical signals in a direction of a plane that is substantially perpendicular to the surface of the die substrate 1702 upon which the device layer 1704 is formed. In some embodiments, the vias 1728b may electrically couple lines 1728a of different interconnect layers 1706-1710 together.

The interconnect layers 1706-1710 may include a dielectric material 1726 disposed between the interconnect structures 1728, as shown in FIG. 17. In some embodiments, dielectric material 1726 disposed between the interconnect structures 1728 in different ones of the interconnect layers 1706-1710 may have different compositions; in other embodiments, the composition of the dielectric material 1726 between different interconnect layers 1706-1710 may be the same. The device layer 1704 may include a dielectric material 1726 disposed between the transistors 1740 and a bottom layer of the metallization stack as well. The dielectric material 1726 included in the device layer 1704 may have a different composition than the dielectric material 1726 included in the interconnect layers 1706-1710; in other embodiments, the composition of the dielectric material 1726 in the device layer 1704 may be the same as a dielectric material 1726 included in any one of the interconnect layers 1706-1710.

A first interconnect layer 1706 (referred to as Metal 1 or "M1") may be formed directly on the device layer 1704. In some embodiments, the first interconnect layer 1706 may include lines 1728a and/or vias 1728b, as shown. The lines 1728a of the first interconnect layer 1706 may be coupled with contacts (e.g., the S/D contacts 1724) of the device layer 1704. The vias 1728b of the first interconnect layer 1706 may be coupled with the lines 1728a of a second interconnect layer 1708.

The second interconnect layer 1708 (referred to as Metal 2 or "M2") may be formed directly on the first interconnect layer 1706. In some embodiments, the second interconnect layer 1708 may include via 1728b to couple the lines 1728 of the second interconnect layer 1708 with the lines 1728a of a third interconnect layer 1710. Although the lines 1728a and the vias 1728b are structurally delineated with a line within individual interconnect layers for the sake of clarity, the lines 1728a and the vias 1728b may be structurally and/or materially contiguous (e.g., simultaneously filled during a dual-damascene process) in some embodiments.

The third interconnect layer 1710 (referred to as Metal 3 or "M3") (and additional interconnect layers, as desired) may be formed in succession on the second interconnect layer 1708 according to similar techniques and configurations described in connection with the second interconnect layer 1708 or the first interconnect layer 1706. In some embodiments, the interconnect layers that are "higher up" in the metallization stack 1719 in the integrated circuit device 1700 (i.e., farther away from the device layer 1704) may be thicker that the interconnect layers that are lower in the metallization stack 1719, with lines 1728a and vias 1728b in the higher interconnect layers being thicker than those in the lower interconnect layers.

The integrated circuit device 1700 may include a solder resist material 1734 (e.g., polyimide or similar material) and one or more conductive contacts 1736 formed on the interconnect layers 1706-1710. In FIG. 17, the conductive contacts 1736 are illustrated as taking the form of bond pads. The conductive contacts 1736 may be electrically coupled with the interconnect structures 1728 and configured to route the electrical signals of the transistor(s) 1740 to external devices. For example, solder bonds may be formed on the one or more conductive contacts 1736 to mechanically and/or electrically couple an integrated circuit die including the integrated circuit device 1700 with another component (e.g., a printed circuit board). The integrated circuit device 1700 may include additional or alternate structures to route the electrical signals from the interconnect layers 1706-1710; for example, the conductive contacts 1736 may include other analogous features (e.g., posts) that route the electrical signals to external components.

In some embodiments in which the integrated circuit device 1700 is a double-sided die, the integrated circuit device 1700 may include another metallization stack (not shown) on the opposite side of the device layer(s) 1704. This metallization stack may include multiple interconnect layers as discussed above with reference to the interconnect layers 1706-1710, to provide conductive pathways (e.g., including conductive lines and vias) between the device layer(s) 1704 and additional conductive contacts (not shown) on the opposite side of the integrated circuit device 1700 from the conductive contacts 1736.

In other embodiments in which the integrated circuit device 1700 is a double-sided die, the integrated circuit device 1700 may include one or more through silicon vias (TSVs) through the die substrate 1702; these TSVs may make contact with the device layer(s) 1704, and may provide conductive pathways between the device layer(s) 1704 and additional conductive contacts (not shown) on the opposite side of the integrated circuit device 1700 from the conductive contacts 1736. In some embodiments, TSVs extending through the substrate can be used for routing power and ground signals from conductive contacts on the opposite side of the integrated circuit device 1700 from the conductive contacts 1736 to the transistors 1740 and any other components integrated into the die 1700, and the metallization stack 1719 can be used to route I/O signals from the conductive contacts 1736 to transistors 1740 and any other components integrated into the die 1700.

Multiple integrated circuit devices 1700 may be stacked with one or more TSVs in the individual stacked devices providing connection between one of the devices to any of the other devices in the stack. For example, one or more high-bandwidth memory (HBM) integrated circuit dies can be stacked on top of a base integrated circuit die and TSVs in the HBM dies can provide connection between the individual HBM and the base integrated circuit die. Conductive contacts can provide additional connections between adjacent integrated circuit dies in the stack. In some embodiments, the conductive contacts can be fine-pitch solder bumps (microbumps).

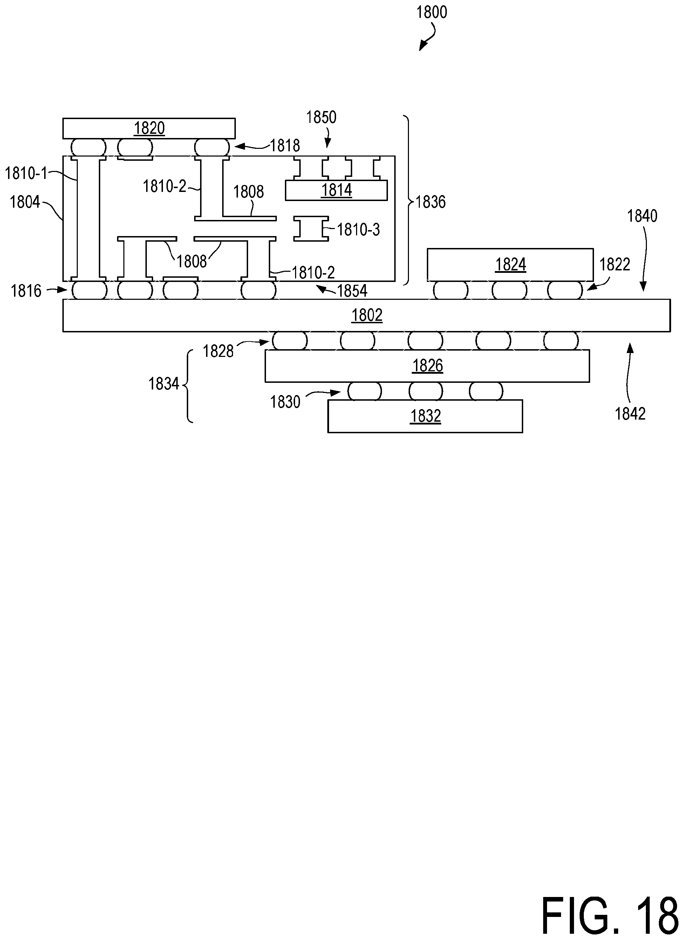

FIG. 18 is a cross-sectional side of an integrated circuit device assembly 1800 that may include any of the microelectronic assemblies or integrated circuit components disclosed herein (e.g., any of the dies 102, 1406, optical interposer 104). The integrated circuit device assembly 1800 includes a number of components disposed on a circuit board 1802 (which may be a motherboard, system board, mainboard, etc.). The integrated circuit device assembly 1800 includes components disposed on a first face 1840 of the circuit board 1802 and an opposing second face 1842 of the circuit board 1802; generally, components may be disposed on one or both faces 1840 and 1842. Any of the integrated circuit components discussed below with reference to the integrated circuit device assembly 1800 may take the form of any suitable ones of the embodiments of the microelectronic assemblies disclosed herein.

In some embodiments, the circuit board 1802 may be a printed circuit board (PCB) including multiple metal (or interconnect) layers separated from one another by layers of dielectric material and interconnected by electrically conductive vias. The individual metal layers comprise conductive traces. Any one or more of the metal layers may be formed in a desired circuit pattern to route electrical signals (optionally in conjunction with other metal layers) between the components coupled to the circuit board 1802. In other embodiments, the circuit board 1802 may be a non-PCB substrate. In some embodiments the circuit board 1802 may be, for example, an integrated circuit component substrate (e.g., 102) or a circuit board 1802 to which a socket is attached. The integrated circuit device assembly 1800 illustrated in FIG. 18 includes a package-on-interposer structure 1836 coupled to the first face 1840 of the circuit board 1802 by coupling components 1816. The coupling components 1816 may electrically and mechanically couple the package-on-interposer structure 1836 to the circuit board 1802, and may include solder balls (as shown in FIG. 18), pins (e.g., as part of a pin grid array (PGA), contacts (e.g., as part of a land grid array (LGA)), male and female portions of a socket, an adhesive, an underfill material, and/or any other suitable electrical and/or mechanical coupling structure. The coupling components 1816 may serve as the coupling components illustrated or described for any of the substrate assembly or substrate assembly components described herein, as appropriate.

The package-on-interposer structure 1836 may include an integrated circuit component 1820 coupled to an interposer 1804 by coupling components 1818. The coupling components 1818 may take any suitable form for the application, such as the forms discussed above with reference to the coupling components 1816. Although a single integrated circuit component 1820 is shown in FIG. 18, multiple integrated circuit components may be coupled to the interposer 1804; indeed, additional interposers may be coupled to the interposer 1804. The interposer 1804 may provide an intervening substrate used to bridge the circuit board 1802 and the integrated circuit component 1820.

The integrated circuit component 1820 may be a packaged or unpacked integrated circuit product that includes one or more integrated circuit dies (e.g., the die 1602 of FIG. 16, the integrated circuit device 1700 of FIG. 17) and/or one or more other suitable components. A packaged integrated circuit component comprises one or more integrated circuit dies mounted on a component substrate with the integrated circuit dies and component substrate encapsulated in a casing material, such as a metal, plastic, glass, or ceramic. In one example of an unpackaged integrated circuit component 1820, a single monolithic integrated circuit die comprises solder bumps attached to contacts on the die. The solder bumps allow the die to be directly attached to the interposer 1804. The integrated circuit component 1820 can comprise one or more computing system components, such as one or more processor units (e.g., system-on-a-chip (SoC), processor core, graphics processor unit (GPU), accelerator, chipset processor), I/O controller, memory, or network interface controller. In some embodiments, the integrated circuit component 1820 can comprise one or more additional active or passive devices such as capacitors, decoupling capacitors, resistors, inductors, fuses, diodes, transformers, sensors, electrostatic discharge (ESD) devices, and memory devices.

In embodiments where the integrated circuit component 1820 comprises multiple integrated circuit dies, the dies can be of the same type (a homogeneous multi-die integrated circuit component) or of two or more different types (a heterogeneous multi-die integrated circuit component). A multi-die integrated circuit component can be referred to as a multi-chip package (MCP) or multi-chip module (MCM).

In addition to comprising one or more processor units, the integrated circuit component 1820 can comprise additional components, such as embedded DRAM, stacked high bandwidth memory (HBM), shared cache memories, input/output (I/O) controllers, or memory controllers. Any of these additional components can be located on the same integrated circuit die as a processor unit, or on one or more integrated circuit dies separate from the integrated circuit dies comprising the processor units. These separate integrated circuit dies can be referred to as "chiplets". In embodiments where an integrated circuit component comprises multiple integrated circuit dies, the integrated circuit dies can be conductively coupled by one or more conductive traces (and vias between the conductive traces if the conductive traces are on multiple layers and/or if the conductive traces are embedded in the substrate, bridge, or interposer) of the component substrate, one or more silicon interposers, one or more silicon bridges embedded in the component substrate, or combinations thereof.

Generally, the interposer 1804 may spread connections to a wider pitch or reroute a connection to a different connection. For example, the interposer 1804 may couple the integrated circuit component 1820 to a set of ball grid array (BGA) conductive contacts of the coupling components 1816 for coupling to the circuit board 1802. In the embodiment illustrated in FIG. 18, the integrated circuit component 1820 and the circuit board 1802 are attached to opposing sides of the interposer 1804; in other embodiments, the integrated circuit component 1820 and the circuit board 1802 may be attached to a same side of the interposer 1804. In some embodiments, three or more components may be interconnected by way of the interposer 1804.

In some embodiments, the interposer 1804 may be formed as a PCB, including multiple metal layers separated from one another by layers of dielectric material and interconnected by electrically conductive vias. In some embodiments, the interposer 1804 may be formed of an epoxy resin, a fiberglass-reinforced epoxy resin, an epoxy resin with inorganic fillers, a ceramic material, or a polymer material such as polyimide. In some embodiments, the interposer 1804 may be formed of alternate rigid or flexible materials that may include the same materials described above for use in a semiconductor substrate, such as silicon, germanium, and other group III-V and group IV materials. The interposer 1804 may include metal interconnects 1808 and vias 1810, including but not limited to through hole vias 1810-1 (that extend from a first face 1850 of the interposer 1804 to a second face 1854 of the interposer 1804), blind vias 1810-2 (that extend from the first or second faces 1850 or 1854 of the interposer 1804 to an internal metal layer), and buried vias 1810-3 (that connect internal metal layers).

In some embodiments, the interposer 1804 can comprise a silicon interposer. Through silicon vias (TSV) extending through the silicon interposer can connect connections on a first face of a silicon interposer to an opposing second face of the silicon interposer. In some embodiments, an interposer 1804 comprising a silicon interposer can further comprise one or more routing layers to route connections on a first face of the interposer 1804 to an opposing second face of the interposer 1804.

The interposer 1804 may further include embedded devices 1814, including both passive and active devices. Such devices may include, but are not limited to, capacitors, decoupling capacitors, resistors, inductors, fuses, diodes, transformers, sensors, electrostatic discharge (ESD) devices, and memory devices. More complex devices such as radio frequency devices, power amplifiers, power management devices, antennas, arrays, sensors, and microelectromechanical systems (MEMS) devices may also be formed on the interposer 1804. The package-on-interposer structure 1836 may take the form of any of the package-on-interposer structures known in the art. In embodiments where the interposer is a non-printed circuit board

The integrated circuit device assembly 1800 may include an integrated circuit component 1824 coupled to the first face 1840 of the circuit board 1802 by coupling components 1822. The coupling components 1822 may take the form of any of the embodiments discussed above with reference to the coupling components 1816, and the integrated circuit component 1824 may take the form of any of the embodiments discussed above with reference to the integrated circuit component 1820.

The integrated circuit device assembly 1800 illustrated in FIG. 18 includes a package-on-package structure 1834 coupled to the second face 1842 of the circuit board 1802 by coupling components 1828. The package-on-package structure 1834 may include an integrated circuit component 1826 and an integrated circuit component 1832 coupled together by coupling components 1830 such that the integrated circuit component 1826 is disposed between the circuit board 1802 and the integrated circuit component 1832. The coupling components 1828 and 1830 may take the form of any of the embodiments of the coupling components 1816 discussed above, and the integrated circuit components 1826 and 1832 may take the form of any of the embodiments of the integrated circuit component 1820 discussed above. The package-on-package structure 1834 may be configured in accordance with any of the package-on-package structures known in the art.

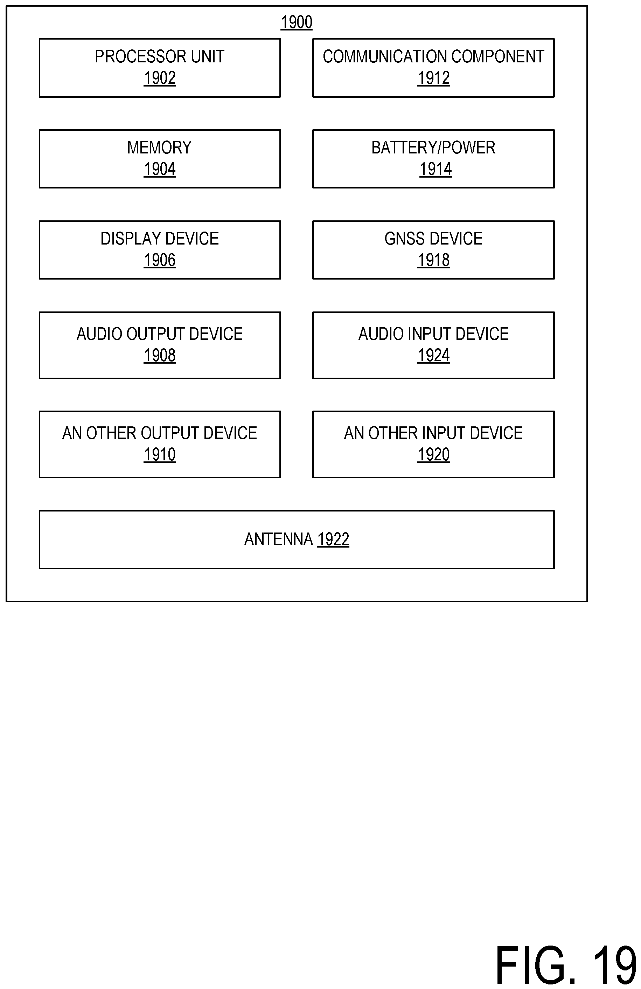

FIG. 19 is a block diagram of an example electrical device 1900 that may include one or more of the microelectronic assemblies or integrated circuit components disclosed herein (e.g., any one of the dies 102, 1406). For example, any suitable ones of the components of the electrical device 1900 may include one or more of the integrated circuit device assemblies, integrated circuit components, integrated circuit devices, or integrated circuit dies disclosed herein, and may be arranged in any of the microelectronic assemblies disclosed herein. A number of components are illustrated in FIG. 19 as included in the electrical device 1900, but any one or more of these components may be omitted or duplicated, as suitable for the application. In some embodiments, some or all of the components included in the electrical device 1900 may be attached to one or more motherboards mainboards, or system boards. In some embodiments, one or more of these components are fabricated onto a single system-on-a-chip (SoC) die.

Additionally, in various embodiments, the electrical device 1900 may not include one or more of the components illustrated in FIG. 19, but the electrical device 1900 may include interface circuitry for coupling to the one or more components. For example, the electrical device 1900 may not include a display device 1906, but may include display device interface circuitry (e.g., a connector and driver circuitry) to which a display device 1906 may be coupled. In another set of examples, the electrical device 1900 may not include an audio input device 1924 or an audio output device 1908, but may include audio input or output device interface circuitry (e.g., connectors and supporting circuitry) to which an audio input device 1924 or audio output device 1908 may be coupled.

The electrical device 1900 may include one or more processor units 1902 (e.g., one or more processor units). As used herein, the terms "processor unit", "processing unit" or "processor" may refer to any device or portion of a device that processes electronic data from registers and/or memory to transform that electronic data into other electronic data that may be stored in registers and/or memory. The processor unit 1902 may include one or more digital signal processors (DSPs), application-specific integrated circuits (ASICs), central processing units (CPUs), graphics processing units (GPUs), general-purpose GPUs (GPGPUs), accelerated processing units (APUs), field-programmable gate arrays (FPGAs), neural network processing units (NPUs), data processor units (DPUs), accelerators (e.g., graphics accelerator, compression accelerator, artificial intelligence accelerator), controller cryptoprocessors (specialized processors that execute cryptographic algorithms within hardware), server processors, controllers, or any other suitable type of processor units. As such, the processor unit can be referred to as an XPU (or xPU).

The electrical device 1900 may include a memory 1904, which may itself include one or more memory devices such as volatile memory (e.g., dynamic random-access memory (DRAM), static random-access memory (SRAM)), non-volatile memory (e.g., read-only memory (ROM), flash memory, chalcogenide-based phase-change non-voltage memories), solid state memory, and/or a hard drive. In some embodiments, the memory 1904 may include memory that is located on the same integrated circuit die as the processor unit 1902. This memory may be used as cache memory (e.g., Level 1 (L1), Level 2 (L2), Level 3 (L3), Level 4 (L4), Last Level Cache (LLC)) and may include embedded dynamic random-access memory (eDRAM) or spin transfer torque magnetic random-access memory (STT-MRAM).

In some embodiments, the electrical device 1900 can comprise one or more processor units 1902 that are heterogeneous or asymmetric to another processor unit 1902 in the electrical device 1900. There can be a variety of differences between the processing units 1902 in a system in terms of a spectrum of metrics of merit including architectural, microarchitectural, thermal, power consumption characteristics, and the like. These differences can effectively manifest themselves as asymmetry and heterogeneity among the processor units 1902 in the electrical device 1900.

In some embodiments, the electrical device 1900 may include a communication component 1912 (e.g., one or more communication components). For example, the communication component 1912 can manage wireless communications for the transfer of data to and from the electrical device 1900. The term "wireless" and its derivatives may be used to describe circuits, devices, systems, methods, techniques, communications channels, etc., that may communicate data through the use of modulated electromagnetic radiation through a nonsolid medium. The term "wireless" does not imply that the associated devices do not contain any wires, although in some embodiments they might not.

The communication component 1912 may implement any of a number of wireless standards or protocols, including but not limited to Institute for Electrical and Electronic Engineers (IEEE) standards including Wi-Fi (IEEE 802.11 family), IEEE 802.16 standards (e.g., IEEE 802.16-2005 Amendment), Long-Term Evolution (LTE) project along with any amendments, updates, and/or revisions (e.g., advanced LTE project, ultra mobile broadband (UMB) project (also referred to as "3GPP2"), etc.). IEEE 802.16 compatible Broadband Wireless Access (BWA) networks are generally referred to as WiMAX networks, an acronym that stands for Worldwide Interoperability for Microwave Access, which is a certification mark for products that pass conformity and interoperability tests for the IEEE 802.16 standards. The communication component 1912 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication component 1912 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication component 1912 may operate in accordance with Code Division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication component 1912 may operate in accordance with other wireless protocols in other embodiments. The electrical device 1900 may include an antenna 1922 to facilitate wireless communications and/or to receive other wireless communications (such as AM or FM radio transmissions).

In some embodiments, the communication component 1912 may manage wired communications, such as electrical, optical, or any other suitable communication protocols (e.g., IEEE 802.3 Ethernet standards). As noted above, the communication component 1912 may include multiple communication components. For instance, a first communication component 1912 may be dedicated to shorter-range wireless communications such as Wi-Fi or Bluetooth, and a second communication component 1912 may be dedicated to longer-range wireless communications such as global positioning system (GPS), EDGE, GPRS, CDMA, WiMAX, LTE, EV-DO, or others. In some embodiments, a first communication component 1912 may be dedicated to wireless communications, and a second communication component (not shown) may be dedicated to wired communications.

The electrical device 1900 may include battery/power circuitry 1914. The battery/power circuitry 1914 may include one or more energy storage devices (e.g., batteries or capacitors) and/or circuitry for coupling components of the electrical device 1900 to an energy source separate from the electrical device 1900 (e.g., AC line power).

The electrical device 1900 may include a display device 1906 (or corresponding interface circuitry, as discussed above). The display device 1906 may include one or more embedded or wired or wirelessly connected external visual indicators, such as a heads-up display, a computer monitor, a projector, a touchscreen display, a liquid crystal display (LCD), a light-emitting diode display, or a flat panel display.

The electrical device 1900 may include an audio output device 1908 (or corresponding interface circuitry, as discussed above). The audio output device 1908 may include any embedded or wired or wirelessly connected external device that generates an audible indicator, such speakers, headsets, or earbuds.

The electrical device 1900 may include an audio input device 1924 (or corresponding interface circuitry, as discussed above). The audio input device 1924 may include any embedded or wired or wirelessly connected device that generates a signal representative of a sound, such as microphones, microphone arrays, or digital instruments (e.g., instruments having a musical instrument digital interface (MIDI) output). The electrical device 1900 may include a Global Navigation Satellite System (GNSS) device 1918 (or corresponding interface circuitry, as discussed above), such as a Global Positioning System (GPS) device. The GNSS device 1918 may be in communication with a satellite-based system and may determine a geolocation of the electrical device 1900 based on information received from one or more GNSS satellites, as known in the art.

The electrical device 1900 may include an other output device 1910 (or corresponding interface circuitry, as discussed above). Examples of the other output device 1910 may include an audio codec, a video codec, a printer, a wired or wireless transmitter for providing information to other devices, or an additional storage device.

The electrical device 1900 may include an other input device 1920 (or corresponding interface circuitry, as discussed above). Examples of the other input device 1920 may include an accelerometer, a gyroscope, a compass, an image capture device (e.g., monoscopic or stereoscopic camera), a trackball, a trackpad, a touchpad, a keyboard, a cursor control device such as a mouse, a stylus, a touchscreen, proximity sensor, microphone, a bar code reader, a Quick Response (QR) code reader, electrocardiogram (ECG) sensor, PPG (photoplethysmogram) sensor, galvanic skin response sensor, any other sensor, or a radio frequency identification (RFID) reader. One or more of the aforementioned input devices may be user interfaces through which a human user can provide input to the electrical device 1900. Such input may be rendered on the display device 1906 in at least some examples.

The electrical device 1900 may have any desired form factor, such as a hand-held or mobile electrical device (e.g., a cell phone, a smart phone, a mobile internet device, a music player, a tablet computer, a laptop computer, a 2-in-1 convertible computer, a portable all-in-one computer, a netbook computer, an ultrabook computer, a personal digital assistant (PDA), an ultra mobile personal computer, a portable gaming console, etc.), a desktop electrical device, a server, a rack-level computing solution (e.g., blade, tray or sled computing systems), a workstation or other networked computing component, a printer, a scanner, a monitor, a set-top box, an entertainment control unit, a stationary gaming console, smart television, a vehicle control unit, a digital camera, a digital video recorder, a wearable electrical device or an embedded computing system (e.g., computing systems that are part of a vehicle, smart home appliance, consumer electronics product or equipment, manufacturing equipment). In some embodiments, the electrical device 1900 may be any other electronic device that processes data. In some embodiments, the electrical device 1900 may comprise multiple discrete physical components. Given the range of devices that the electrical device 1900 can be manifested as in various embodiments, in some embodiments, the electrical device 1900 can be referred to as a computing device or a computing system.

As used in this application and the claims, a list of items joined by the term "and/or" can mean any combination of the listed items. For example, the phrase "A, B and/or C" can mean A; B; C; A and B; A and C; B and C; or A, B and C. As used in this application and the claims, a list of items joined by the term "at least one of" can mean any combination of the listed terms. For example, the phrase "at least one of A, B or C" can mean A; B; C; A and B; A and C; B and C; or A, B, and C. Moreover, as used in this application and the claims, a list of items joined by the term "one or more of' can mean any combination of the listed terms. For example, the phrase "one or more of A, B and C" can mean A; B; C; A and B; A and C; B and C; or A, B, and C.

As used in this application and the claims, the phrase "individual of" or "respective of" following by a list of items recited or stated as having a trait, feature, etc. means that all of the items in the list possess the stated or recited trait, feature, etc. For example, the phrase "individual of A, B, or C, comprise a sidewall" or "respective of A, B, or C, comprise a sidewall" means that A comprises a sidewall, B comprises sidewall, and C comprises a sidewall.

The disclosed methods, apparatuses, and systems are not to be construed as limiting in any way. Instead, the present disclosure is directed toward all novel and nonobvious features and aspects of the various disclosed embodiments, alone and in various combinations and subcombinations with one another. The disclosed methods, apparatuses, and systems are not limited to any specific aspect or feature or combination thereof, nor do the disclosed embodiments require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

Although the operations of some of the disclosed methods are described in a particular, sequential order for convenient presentation, it is to be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods can be used in conjunction with other methods.

The following examples pertain to additional embodiments of technologies disclosed herein.

The following examples pertain to embodiments in accordance with this specification. Example A1 provides an apparatus that includes: an optical interposer including a first surface, a first mating protrusion extending outwardly from the first surface of the optical interposer, and two or more alignment protrusions extending outwardly from the first surface of the optical interposer, wherein the first mating protrusion is to be partially disposed within a first recess formed in a second surface of a photonic integrated circuit (PIC) die when the first surface of the optical interposer opposes the second surface of the PIC die and respective distal surfaces of the two or more alignment protrusions contact the second surface of the PIC die.

Example A2 comprises the subject matter of Example A1, and a first space is to be defined between the first surface of the optical interposer and the second surface of the PIC die when the respective distal surfaces of the two or more alignment protrusions contact the second surface of the PIC die.

Example A3 comprises the subject matter of any one of Examples A1-A2, and the optical interposer further comprises a first waveguide to be aligned with another waveguide in the PIC die.

Example A4 comprises the subject matter of Example A3, and the first waveguide of the optical interposer is disposed in the first mating protrusion of the optical interposer.

Example A5 comprises the subject matter of any one of Examples A1-A4, and when the first mating protrusion is partially disposed within the first recess of the PIC die, a first portion of an outer surface of the first mating protrusion is to contact a first side wall of the first recess and a second portion of the outer surface of the first mating protrusion is to oppose a second side wall of the first recess such that a second space is defined therebetween.

Example A6 comprises the subject matter of Example A5, and the first portion and the second portion are on opposite sides of the first mating protrusion.

Example A7 comprises the subject matter of any one of Examples A1-A6, and a first height of the two or more alignment protrusions is less than a second height of the first mating protrusion.

Example A8 comprises the subject matter of any one of Examples A1-A7, and a first alignment protrusion of the two or more alignment protrusions includes a first distal surface having a substantially hemispherical shape, a substantially semi-conical shape, or a substantially planar shape.

Example A9 comprises the subject matter of any one of Examples A1-A8, and the two or more alignment protrusions include at least three alignment protrusions in a nonlinear arrangement.

Example A10 comprises the subject matter of Example A9, and three distal surfaces of the at least three alignment protrusions, respectively, define a plane that is substantially parallel to the first surface of the optical interposer.

Example A11 comprises the subject matter of any one of Examples A1-A10, and a second alignment protrusion of the two or more alignment protrusions is substantially cylindrical and is arranged such that a longitudinal axis of the first alignment protrusion is substantially parallel to the first surface of the optical interposer.

Example A12 comprises the subject matter of any one of Examples A1-A11, and the first mating protrusion includes a distal portion that is substantially cylindrical and is arranged such that a longitudinal axis of the distal portion is substantially parallel to the first surface of the optical interposer.

Example A13 is an integrated circuit package and comprises the subject matter of any one of Examples A1-A12 and further comprises the PIC die, one or more electronic integrated circuit (EIC) dies, and the one or more EIC dies are electrically coupled to the PIC die, wherein the one or more EIC dies are electrically coupled to or integrated with a processor.

Example B1 provides an apparatus that includes a photonic integrated circuit (PIC) die that includes a first waveguide and one or more recesses formed in a first surface of the PIC die. The apparatus further includes an optical interposer comprising a second waveguide aligned with the first waveguide of the PIC die, one or more mating protrusions partially disposed in the one or more recesses, respectively, and one or more alignment protrusions extending between a second surface of the optical interposer and the first surface of the PIC die such that the second surface of the optical interposer opposes and is spaced from the first surface of the PIC die.

Example B2 comprises the subject matter of Example B1, and the second waveguide of the optical interposer is disposed in one of the one or more mating protrusions of the optical interposer.

Example B3 comprises the subject matter of any one of Examples B1-B2, and a first recess of the one or more recesses is defined by at least a first wall and a second wall formed in the PIC die.

Example B4 comprises the subject matter of Example B3, and a first portion of an outer surface of a first mating protrusion contacts the first wall formed in the PIC die, wherein a second portion of the outer surface of the first mating protrusion opposes and is spaced from the second wall formed in the PIC die.

Example B5 comprises the subject matter of any one of Examples B1-B4, and the one or more alignment protrusions extend outwardly from the second surface of the optical interposer and comprise respective distal surfaces.

Example B6 comprises the subject matter of Example B5, and a first height of the one or more alignment protrusions is less than a second height of the one or more mating protrusions.

Example B7 comprises the subject matter of any one of Examples B5-B6, and at least respective portions of the distal surfaces contact the first surface of the PIC die.

Example B8 comprises the subject matter of any one of Examples B1-B7, and at least one alignment protrusion of the one or more alignment protrusions includes a first distal surface having a substantially hemispherical shape, a substantially semi-conical shape, or a substantially planar shape.

Example B9 comprises the subject matter of any one of Examples B1-B8, and the one or more alignment protrusions include at least three alignment protrusions in a nonlinear arrangement.

Example B10 comprises the subject matter of Example B9, and three distal surfaces of the at least three alignment protrusions, respectively, define a plane that is substantially parallel to the second surface of the optical interposer.

Example B11 comprises the subject matter of any one of Examples B1-B10, and a first alignment protrusion of the one or more alignment protrusions is substantially cylindrical and is arranged such that a longitudinal axis of the first alignment protrusion is substantially parallel to the second surface of the optical interposer.

Example B12 comprises the subject matter of any one of Examples B1-B11, and the one or more recesses are shaped as one or more v-grooves or one or more inverted pyramids.

Example B13 comprises the subject matter of any one of Examples B1-B4 or any one of Examples B8-B12, and the one or more alignment protrusions extend outwardly from the first surface of the PIC die and comprise respective distal surfaces.

Example B14 comprises the subject matter of Example B13, and at least a portion of the respective distal surfaces contacts the second surface of the optical interposer.

Example B15 comprises the subject matter of any one of Examples B1-B14, and the PIC die further includes a first plurality of waveguides, the optical interposer further includes a second plurality of waveguides, and the first plurality of waveguides is aligned with the second plurality of waveguides, respectively.

Example B 16 comprises the subject matter of any one of Examples B 1-B 15, and further comprises a processor communicatively coupled to the PIC die by an electrical integrated circuit (EIC), a display communicatively coupled to the processor, and a user interface configured to receive input from a user, the input to be rendered on the display.

Example B17 is an integrated circuit package and comprises the subject matter of any one of Examples B 1-B 15 and further comprises one or more electronic integrated circuit (EIC) dies, wherein the one or more EIC dies are electrically coupled to the PIC die, wherein the one or more EIC dies are electrically coupled to or integrated with a processor.

Example C1 provides an apparatus including: a photonic integrated circuit (PIC) die including a first surface, an optical interposer including a second surface and a first mating protrusion extending outwardly from the second surface and being partially disposed within a first recess formed in the first surface of the PIC die, and two or more alignment protrusions extending between the first surface of the PIC die and the second surface of the optical interposer such that a first space is defined therebetween.

Example M1 provides a method including: forming an optical interposer including a first mating protrusion and two or more alignment protrusions, wherein the first mating protrusion and the two or more alignment protrusions are formed on a first surface of the optical interposer; mounting the optical interposer on a photonic integrated circuit (PIC) die, the PIC die including a recess defined, in part, by a first side wall formed in a second surface of the PIC die, wherein the mounting includes positioning the optical interposer such that the two or more alignment protrusions extend between the first surface of the optical interposer and the second surface of the PIC die and such that the first mating protrusion is partially received in the recess, and moving the optical interposer laterally relative to the second surface of the PIC die such that a portion of an outer surface of the first mating protrusion contacts the first side wall of the recess.

Example M2 comprises the subject matter of Example M1, and further comprises aligning one or more first waveguides of the optical interposer with one or more second waveguides of the PIC die.

Example M3 comprises the subject matter of Examples M2, and further comprising forming the one or more first waveguides in one or more mating protrusions, respectively, of the optical interposer.

Example M4 comprises the subject matter of any one of Examples M1-M3, and further comprises forming the recess in the PIC die sized to allow partial insertion of the first mating protrusion into the recess, and prior to moving the optical interposer laterally, a first space is defined between the first portion of the outer surface of the first mating protrusion and the first side wall of the recess and a second space is defined between a second portion of the outer surface of the first mating protrusion and a second side wall of the recess.

Example M5 comprises the subject matter of any Example M4, and the recess is defined by at least the first side wall and the second side wall formed in the PIC die.

Example M6 comprises the subject matter of any one of Examples M1-M5, and the two or more alignment protrusions extend outwardly from the first surface of the optical interposer and include respective distal surfaces.

Example M7 comprises the subject matter of Example M6, and a first height of the two or more alignment protrusions is less than a second height of the first mating protrusion.

Example M8 comprises the subject matter of any one of Examples M6-M7, and the mounting the optical interposer on the PIC die further includes causing at least a portion of each of the respective distal surfaces to contact the second surface of the PIC die

Example M9 comprises the subject matter of any one of Examples M1-M8, and at least one alignment protrusion of the two or more alignment protrusions includes a first distal surface having a substantially hemispherical shape, a substantially semi-conical shape, or a substantially planar shape.

Example M10 comprises the subject matter of any one of Examples M1-M9, and the two or more alignment protrusions include at least three alignment protrusions in a nonlinear arrangement.

Example M11 comprises the subject matter of Example M10, and three distal surfaces of the at least three alignment protrusions, respectively, define a plane that is substantially parallel to the first surface of the optical interposer.

Example M12 comprises the subject matter of any one of Examples M1-M11, and a first alignment protrusion of the two or more alignment protrusions is substantially cylindrical and is arranged such that a longitudinal axis of the first alignment protrusion is substantially parallel to the first surface of the optical interposer.

Example M13 comprises the subject matter of any one of Examples M1-M12, and the recess of the PIC die and a second recess of the PIC die are shaped as V-grooves or inverted pyramids.

Example M14 comprises the subject matter of any one of Examples M1-M13, and further comprises mounting the PIC die to a substrate, mounting a processor to the substrate such that the processor is communicatively coupled to the PIC die by an electrical integrated circuit (EIC), and completing packaging of an integrated circuit package including the substrate, the PIC die, the EIC, the processor, and the optical interposer.

Example M15 comprises the subject matter of Example M14, and the EIC is either integrated with or separately connected to the processor.

Example M16 comprises the subject matter of any one of Examples M1-M5 or any one of Examples M9-M15, and the two or more alignment protrusions extend outwardly from the second surface of the PIC die and comprise respective distal surfaces.

Example M17 comprises the subject matter of Example M16, and at least a portion of the respective distal surfaces contacts the first surface of the optical interposer.

## Claims

1. An apparatus comprising:
a photonic integrated circuit (PIC) die comprising:
a first waveguide; and
one or more recesses formed in a first surface of the PIC die; and
an optical interposer comprising:
a second waveguide aligned with the first waveguide of the PIC die;
one or more mating protrusions partially disposed in the one or more recesses, respectively; and
one or more alignment protrusions extending between a second surface of the optical interposer and the first surface of the PIC die such that the second surface of the optical interposer opposes and is spaced from the first surface of the PIC die.

2. The apparatus of Claim 1, wherein the second waveguide of the optical interposer is disposed in one of the one or more mating protrusions of the optical interposer.

3. The apparatus of any one of Claims 1-2, wherein a first recess of the one or more recesses is defined by at least a first wall and a second wall formed in the PIC die.

4. The apparatus of Claim 3, wherein a first portion of an outer surface of a first mating protrusion contacts the first wall formed in the PIC die, wherein a second portion of the outer surface of the first mating protrusion is spaced from the second wall formed in the PIC die.

5. The apparatus of any one of Claims 1-4, wherein the one or more alignment protrusions extend outwardly from the second surface of the optical interposer and comprise respective distal surfaces, wherein at least a portion of the respective distal surfaces contacts the first surface of the PIC die.

6. The apparatus of any one of Claims 1-5 wherein a first height of the one or more alignment protrusions is less than a second height of the one or more mating protrusions.

7. The apparatus of any one of Claims 1-6, wherein at least one alignment protrusion of the one or more alignment protrusions includes a first distal surface having a substantially hemispherical shape, a substantially semi-conical shape, or a substantially planar shape.

8. The apparatus of any one of Claims 1-7, wherein the one or more alignment protrusions include at least three alignment protrusions in a nonlinear arrangement.

9. The apparatus of any one of Claims 1-4, wherein the one or more alignment protrusions extend outwardly from the first surface of the PIC die and comprise respective distal surfaces.

10. The apparatus of Claim 9, wherein at least a portion of the respective distal surfaces contacts the second surface of the optical interposer.

11. The apparatus of any one of Claims 1-10, wherein the one or more recesses are shaped as one or more V-grooves or one or more inverted pyramids.

12. The apparatus of Claim 1, further comprising:
a processor communicatively coupled to the PIC die by an electrical integrated circuit (EIC);
a display communicatively coupled to the processor; and
a user interface configured to receive input from a user, the input to be rendered on the display.

13. The apparatus of any one of Claims 1-12, wherein the PIC die further includes a first plurality of waveguides, the optical interposer further includes a second plurality of waveguides, and the first plurality of waveguides is aligned with the second plurality of waveguides, respectively.

14. A method comprising:
forming an optical interposer including a first mating protrusion and two or more alignment protrusions, wherein the first mating protrusion and the two or more alignment protrusions are formed on a first surface of the optical interposer; and
mounting the optical interposer on a photonic integrated circuit (PIC) die, the PIC die including a recess defined, in part, by a first side wall formed in a second surface of the PIC die, wherein the mounting includes positioning the optical interposer such that the two or more alignment protrusions extend between the first surface of the optical interposer and the second surface of the PIC die and such that the first mating protrusion is partially received in the recess.

15. The method of Claim 14, further comprising:
moving the optical interposer laterally relative to the second surface of the PIC die such that a first portion of an outer surface of the first mating protrusion contacts the first side wall of the recess.
